# EUROPÄISCHE PATENTANMELDUNG

(11) **EP 4 596 597 A1**
(43) Veröffentlichungstag der Anmeldung: **06.08.2025**
(21) Anmeldenummer: 25154379.9
(22) Anmeldetag: 28.01.2025
(51) Int. Cl.: C08G 18/09, C08G 18/16, C08G 18/18, C08G 18/22, C08G 18/42, C08G 18/48, C08G 18/76

(54) **HERSTELLUNG VON POLYURETHAN- ODER POLYISOCYANURAT-SCHAUMSTOFF**

(30) Priorität: 02.02.2024 EP 24155464
(71) Anmelder: Evonik Operations GmbH, 45128 Essen (DE)
(72) Erfinder: Glos, Martin, 46325 Borken (DE); Dietz, Katharina, 40878 Ratingen (DE)
(74) Vertreter: Evonik Patent Association

(57) **Zusammenfassung**

Die Erfindung betrifft eine Zusammensetzung zur Herstellung von Polyurethan- oder Polyisocyanurat-Schaumstoff, umfassend eine Polyisocyanat-Komponente, eine Reycling-Polyol enthaltende Polyolkomponente, mindestens ein tertiäres Amin, wobei die Zusammensetzung zusätzlich mindestens eine zusätzliche Stickstoff-haltige Verbindung V enthält, vorzugsweise ausgewählt aus der Gruppe bestehend aus Amine, Amin-Alkoxylate, Aminosäuren, Amine mit mehreren Säure-Funktionen und modifizierte Phenole, welche mindestens zwei N-Atome aufweisen, sowie zusätzlich mindestens ein Zink(II)-Carboxylat enthält, mit der Maßgabe, dass das enthaltene Zink(II)-Carboxylat in stöchiometrischer Form eingesetzt wird, also mit Zn(II) und Carboxylat im molaren Verhältnis von 1 zu 2.

## Beschreibung

Die vorliegende Erfindung liegt auf dem Gebiet der Polyurethane (PU) und Polyisocyanurate (PIR), insbesondere der PU- oder PIR-Schaumstoffe. Insbesondere betrifft sie eine Zusammensetzung zur Herstellung von Polyurethan- oder Polyisocyanurat-Schaumstoff, ein Verfahren zur Herstellung von Polyurethan- oder Polyisocyanurat-Schaumstoff, sowie Polyurethan- oder Polyisocyanurat-Schaumstoff und weiterhin die Verwendung der Schaumstoffe, die damit hergestellt wurden.

Unter Polyurethan (PU) wird im Rahmen der vorliegenden Erfindung insbesondere ein Produkt, erhältlich durch Reaktion von Polyisocyanaten und Polyolen bzw. Verbindungen mit Isocyanat-reaktiven Gruppen, verstanden. Es können hierbei neben dem Polyurethan auch weitere funktionelle Gruppen gebildet werden, wie z.B. Uretdione, Carbodiimide, Isocyanurate, Allophanate, Biurete, Harnstoffe und/oder Uretimine. Daher werden unter PU im Sinne der vorliegenden Erfindung sowohl Polyurethan als auch Polyisocyanurat, Polyharnstoffe und Uretdion-, Carbodiimid-, Allophanat-, Biuret- und Uretimin-Gruppen enthaltende Polyisocyanat-Reaktionsprodukte verstanden. Unter Polyurethanschaumstoff (PU-Schaumstoff) wird im Rahmen der vorliegenden Erfindung insbesondere Schaumstoff verstanden, der als Reaktionsprodukt basierend auf Polyisocyanaten und Polyolen bzw. Verbindungen mit Isocyanat-reaktiven Gruppen erhalten wird. Es können hierbei neben dem Namen gebenden Polyurethan auch weitere funktionelle Gruppen gebildet werden, wie z.B. Allophanate, Biurete, Harnstoffe, Carbodiimide, Uretdione, Isocyanurate oder Uretimine. Unter Polyisocyanuratschaumstoff (PIR-Schaumstoff) wird im Rahmen der vorliegenden Erfindung insbesondere ein Schaumstoff verstanden, der als Reaktionsprodukt basierend auf Polyisocyanaten und Polyolen bzw. Verbindungen mit Isocyanat-reaktiven Gruppen erhalten wird und bei denen der Isocyanat-Index, also das Verhältnis zwischen Isocyanat- und Isocyanat-reaktiven Gruppen vorzugsweise größer 180 ist. Es können hierbei neben dem Namen gebenden Polyisocyanuraten in jedem Fall auch Polyurethan-Gruppen, sowie gegebenenfalls weitere funktionelle Gruppen, wie z.B. Allophanate, Biurete, Harnstoffe, Carbodiimide, Uretdione, oder Uretimine, gebildet werden.

Im Zusammenhang mit der Bereitstellung von PU- und PIR-Schaumstoffen ist es ganz allgemein ein besonders wichtiges Anliegen, diese aus nachhaltigen Materialien herzustellen und einen Beitrag zu einer funktionierenden Kreislaufwirtschaft im Bereich der Polyurethanschaumstoffe zu liefern. Zur Etablierung eines zirkulären Rohstoffstroms ist der Einsatz von Recycling-Polyolen essentiell. Hierbei können z.B. Recycling-Polyole eingesetzt werden, die durch das chemische Recycling von recycelfähigen Kunststoffen wie Polyestern, Polycarbonaten, Polyamiden, etc., insbesondere thermoplastischen Polyestern oder auch Polyurethanen, insbesondere Polyurethanschaumstoffen und besonders bevorzugt Polyurethanhartschaumstoffen, erhalten werden.

Möglichkeiten zur Herstellung solcher Recycling-Polyole auf Basis von Polyestern, wie beispielsweise thermoplastischem Polyethylenterephthalat (PET), und deren Verwendung zur Herstellung von Polyurethanen sind vielfältig in der Patent-Literatur beschrieben und dem Fachmann wohlbekannt (vgl. beispielsweise US 4048104 A, US 4223068 A, US 4246365 A, US 9896540 B2, US 4237238 A, EP 0154079 B1). Der Einsatz von z.B. Recycling-Polyesterpolyolen bei der Herstellung von PU- oder PIR-Schaumstoffen ist grundsätzlich erstrebenswert.

Üblicherweise können Polyesterpolyole durch Kondensation aromatischer Disäuren, Diester oder Anhydride, insbesondere Phthalsäureanhydrid oder Dimethylterephthalat, mit Glykolen wie Ethylenglykol, Propylenglykol oder Diethylenglykol, hergestellt werden, wobei es sich in der Regel um petrochemische Rohstoffe handelt. Auch wenn diese partiell durch bio-basierte Rohstoffe ersetzt werden können, ist insbesondere die Nutzung von Recycling-Polyesterpolyolen für eine nachhaltige Umgestaltung der Kunststoff-Industrie interessant.

Möglichkeiten zur Herstellung von Recycling-Polyesterpolyolen auf Basis von thermoplastischen Polyestern, wie beispielsweise Polyethylenterephthalat (PET), und deren Verwendung zur Herstellung von Polyurethanen sind in der Literatur beschrieben und dem Fachmann bekannt (vgl. beispielsweise US 71183176 A, US 94632378 A, DE 2637170 A, US 8132579 A, EP 0154079 B1). Das chemische Recycling von Polyestern basiert grundsätzlich auf einer Hydrolyse der Estergruppen mithilfe von Wasser, einer Umesterung mit ein- oder mehrwertigen Alkoholen, insbesondere Glykolen (Glykolyse), Aminoalkoholen oder Aminen oder einer Kombination verschiedener Chemolyse-Reagenzien (vgl. Mohamad Sadeghi, G. M., & Sayaf, M. (2012). From PET Waste to Novel Polyurethanes, in "Material Recycling - Trends and Perspectives", Dimitris Achilias (Ed.), ISBN: 978-953-51-0327-1, InTech, doi: 10.5772/31642). Dabei haben sich insbesondere mittels Glykolyse erhaltene Recycling-Polyesterpolyole für den Einsatz in Polyurethanhartschaumstoffen etabliert (vgl. z.B. EP 0154079 B1, US 9896540 B2). Grundsätzlich basiert eine Polyester-Glykolyse auf der Umesterung des Abfall-Polyester mit einem meist überstöchiometrisch eingesetzten Glykol, insbesondere Ethylenglykol, Propylenglykol oder Diethylenglykol, in Anwesenheit eines geeigneten, häufig Zink- oder Titan-basierten Katalysators. Hierbei wird je nach Reaktionsbedingungen, insbesondere dem Verhältnis zwischen Polymer und Glykol, sowie der Reaktionszeit und - temperatur, eine Mischung aus Glykol und hydroxy-terminierten Oligomeren bzw. bei vollständiger Glykolyse dem Diester des Säure-Monomers gewonnen. Im Falle der Glykolyse von PET mittels Ethylenglykol wird beispielsweise bei vollständiger Glykolyse Bis(2-hydroxyethyl)terephthalat erhalten.

Eine Zusammenfassung untersuchter und etablierter Chemolyse-Reagenzien, Katalysatoren und Prozessbedingungen ist in dem Übersichtsartikel "Recent advances in chemical recycling of polyethylene terephthalate waste into value added products for sustainable coating solutions - hope vs. hype" zu finden (Ghosal, K., & Nayak, C. (2022). Recent advances in chemical recycling of polyethylene terephthalate waste into value added products for sustainable coating solutions - hope vs. hype. Materials Advances, 3(4), 1974-1992. https://doi.org/10.1039/d1ma01112j).). Recycling-Polyole auf Basis von Polyestern können insbesondere aus Abfall-Plastikflaschen, Textilien oder Teppichen gewonnen werden. Der Einsatz derartiger Recycling-Polyesterpolyole ist in der Polyurethan-Industrie grundsätzlich etabliert (vgl. Tullo, A. (2020). Making polyurethane raw materials from old bottles. Chemical & Engineering News, 98(46), S. 21. https://doi.org/10.1021/cen-09846-feature4)).

Gegenüber typischerweise zur Herstellung von Polyurethanhartschaumstoffen eingesetzten Polyesterpolyolen, die auf petrochemischem Rohstoffen basieren, können sich Recycling-Polyesterpolyole jedoch hinsichtlich der für diese Anwendung bevorzugt eingesetzten Monomere bzw. Monomer-Zusammensetzungen, der durchschnittlichen Polyol-Funktionalitäten, der Breite der Molekulargewichtsverteilungen sowie möglichen Rückständen von Umesterungs-Katalysatoren unterscheiden. Hierdurch können sowohl intrinsische Polyol-Eigenschaften wie die Viskosität, Schmelz- und Glass-Übergangstemperatur, als auch das Reaktivitätsprofil in der Herstellung von Polyurethanhartschaumstoffen entscheidend beeinflusst werden.

Auch die Herstellung von Recycling-Polyolen durch Depolymerisation von Polyurethan ist bekannt. Eine umfassende Übersicht über die etablierten Polyurethan-Recycling-Verfahren ist beispielsweise in dem Übersichtsartikel "Recycling of polyurethanes from laboratory to industry, a journey towards the sustainability" zu finden (Simón, D., Borreguero, A. M., De Lucas, A., & RodriGuez, J. F. (2018). Recycling of polyurethanes from laboratory to industry, a journey towards the sustainability. Waste Management, 76, 147-171. https://doi.org/10.1016/j.wasman.2018.03.041). Grundsätzlich können verschiedene Solvolyse-Verfahren wie Alkoholyse, insbesondere Glykolyse (vgl. z.B. EP 0105167 A1, US 5274004 A, EP 0592952 B1, DE 4234335 A1, EP 0714930 B1, EP 0718349 A1, EP 0733669 B1, EP 0753535 B1, EP 0838492 A2, EP 0875528 A1, WO 0164778 B1, EP 1149862 B1, ES 2277554 B1, KR 100893355 B1, JP 4536283 B2, KR 101164382 B1, CN 102516593 A, CA 2922737 A1, CN 105399985 A, CN 114106281 A, KR 20230042812 A), Acidolyse (vlg. WO 2018091575 A1, DE 102013106364 A1), Aminolyse (vgl. z.B. EP 1149862 B1, KR 101164382 B1, JP 4536283 B2 oder WO 2020080619 A1), oder Hydrolyse (vgl. z.B. DE 19622761 A1, WO 2023161251 A1, WO 2023161253 A1) angewandt werden.

Im Zusammenhang mit Polyurethan-Hartschaumstoffen haben sich dabei aufgrund ihrer Wirtschaftlichkeit insbesondere Glykolyse-Verfahren als von der Industrie besonders bevorzugte Varianten herauskristallisiert. Die Vielzahl der in der Patentliteratur diesbezüglich beschriebenen Verfahren zeigt dabei das hohe Interesse an einer Nutzung dieser Technologie, aber auch die anhaltende Notwendigkeit zur Optimierung derartiger Verfahren.

Je nach Art des Polyurethan-Schaumabfalls und des gewählten Solvolyse-Verfahrens können aus Polyurethan und PIR-Schaumstoffen Recycling-Polyole erhalten werden, die sich sowohl strukturell als auch hinsichtlich möglicher Verunreinigung von üblicherweise zur Herstellung von Polyurethan- oder PIR-Schaumstoffen eingesetzten Polyether- und Polyester-Polyolen unterscheiden können. Insbesondere durch Acidolyse, Glykolyse und/oder Aminolyse von PU- und PIR-Schaumstoffen erhaltene Recycling-Polyole können Urethan- und Harnstoff-, sowie je nach Schaumstofftyp auch Allophanat-, Biuret-, Carbodiimid- und Isocyanurat-Gruppen enthalten. Darüber hinaus verbleibt zumeist auch das häufig im Überschuss eingesetzte Depolymerisation-Reagenz im Recycling-Polyol. Somit können sich unter anderem die chemische Struktur des Polyols, seine durchschnittliche Funktionalität, die sich als Mittelwert aus höher funktionellem Depolymerisations-Produkt und bifunktionellem Depolymerisations-Reagenz ergibt, sowie die Breite der Molekulargewichtsverteilung von üblicherweise zur Herstellung von Polyurethanschaumstoffen verwendeten Polyolen unterscheiden.

Recycling-Polyole können sowohl aus Produktionsabfällen, als auch aus Abfallmaterialien gewonnen werden, die das Ende ihrer Lebensdauer erreicht haben. Dabei kann es sich beispielsweise um Polyester aus Abfall-Plastikflaschen, Textilien oder Teppichen, sowie z.B. um PolyurethanSchaumstoffe aus gebrauchten Kühlgeräten, gebrauchten Dämmmaterialien bzw. Dämmplatten, gebrauchten Dichtschaumstoffen, gebrauchten Matratzen, gebrauchten Möbeln, gebrauchten Schallabsorptionsmaterialien, gebrauchten Verpackungsschaumstoffen oder gebrauchten Fahrzeugen, handeln.

Die beschriebenen Recycling-Polyole können üblicherweise in Kombination mit einem auf petrochemischen oder bio-basierten Rohstoffen hergestellten Polyol eingesetzt werden. Besonders der Einsatz von hohen Anteilen solcher Recycling-Polyole führt jedoch häufig zu einer Verschlechterung der Schaumqualität, insbesondere der mechanischen Eigenschaften und der Oberflächen-Ästhetik der Schaumstoffe und begrenzt daher in der Regel die Einsatzmenge der Recycling-Polyole im Polyurethanschaum deutlich. So wird beispielsweise in EP 0875528 A1 berichtet, dass es bei Einsatz höherer Mengen eines Recycling-Polyols (> 50%) zu einer Verschlechterung der allgemeinen mechanischen Eigenschaften kommt.

Im Rahmen der vorliegenden Erfindung steht vorzugsweise die Bildung von Polyisocyanuraten (PIR) im Vordergrund. Bei der Herstellung von Polyurethan- oder Polyisocyanurat-Schaumstoffen, vorzugsweise Polyurethan- oder Polyisocyanurat-Hartschaumstoffen, können verschiedene Katalysatoren eingesetzt werden, um das Reaktionsprofil der Verschäumung und die Gebrauchseigenschaften des Schaumstoffs positiv zu beeinflussen. Dabei kann die Bildung von Polyisocyanuraten vorteilhaft sein, da diese gute mechanische Eigenschaften (hohe Stauchhärte) und verbesserte flammhemmenden Eigenschaften ermöglich kann. Diese Reaktion wird als Trimerisierung bezeichnet, da formal drei Isocyanat-Gruppen zu einem Isocyanurat-Ring reagieren. Die Herstellung von z.B. PIR-Schaumstoff, vorzugsweise PIR-Hartschaumstoff, ist in der Literatur beschrieben und erfolgt vorzugsweise durch Umsetzung von Polyisocyanaten mit Verbindungen mit gegenüber Isocyanatgruppen reaktiven Wasserstoffatomen, zumeist Polyether-Polyolen und/oder Polyester-Polyolen, wobei der Isocyanatindex vorzugsweise 180 und größer ist. Dadurch bilden sich zusätzlich zu den Urethanstrukturen, die durch die Umsetzung von Isocyanaten mit Verbindungen mit reaktiven Wasserstoffatomen entstehen, durch Reaktion der Isocyanatgruppen untereinander Isocyanuratstrukturen oder weitere Strukturen, die durch die Reaktion von Isocyanatgruppen mit anderen Gruppen, wie zum Beispiel Polyurethangruppen, entstehen.

Verschiedene Veröffentlichungen bezüglich der Verwendung von Katalysatoren zur Verbesserung der Stauchhärte durch Unterstützung der Trimerisierungsreaktion bei der Herstellung von PU- oder PIR-Hartschäumen sind bekannt.

In EP 1878493 A1 wird die Verwendung von Carbokationenverbindungen als Trimerisierungskatalysatoren beschrieben, wobei die Anionen auf Di-Carbonylverbindungen basieren. Die Verwendung von Zink-Carboxylaten wird nicht beschrieben.

Die US 4452829 beschreibt die Herstellung von Sprühschaumstoff unter Einsatz von Triolen mit Molmassen von über 1000 g/mol. Hierbei werden Zn-Salze in Kombination mit K-Salzen verwendet um den Start der Isocyanat-Wasser Reaktion zu beschleunigen.

US 4200699 beschreibt Gelkatalysator-Zusammensetzungen für die Herstellung von PU-Hartschäumen enthaltend Zn-, K- und Sn-Carboxylate, wobei vorzugsweise ein weiterer Gelkatalysator aus der Gruppe der tertiären Amine, der anorganischen Zinnverbindungen oder der OrganozinnVerbindungen eingesetzt wird.

Die EP 1745847 A1 beschreibt Trimerisierungskatalysatoren auf Basis von Kaliumoctoat und Lösungsmitteln, die gegen die Reaktion mit Isocyanaten inert sind.

In WO 2016/201675 A1 werden Trimerisierungskatalysatoren beschrieben, bestehend aus Zusammensetzungen basierend auf sterisch gehinderten Carboxylaten und tertiären Aminen, die eine Isocyanat-reaktive Gruppe tragen.

WO 2010/054317 A2 beschreibt Imidazolium oder Imidazolinium-Salze als Trimerisierungskatalysatoren.

Die WO 2013/074907 A1 beschreibt die Verwendung von Tetraalkylguanidin-Salzen aromatischer Carbonsäuren als Katalysatoren für Polyurethan-Schäume.

WO 2015/179041 A1 beschreibt die Verwendung von Zink-basierten Katalysatoren zur Vernetzung von Silikon-Harzen. Hierbei werden unterschiedliche Liganden verwendet, unter anderem Phenolbasierte Liganden. Es wird aber keine Katalyse einer Polyurethan- bzw. Isocyanat-Reaktion beschrieben.

WO 2022/218657A1 beschreibt die Herstellung von Polyurethan- oder Polyisocyanurat-Hartschaumstoff unter Einsatz von Zinksalzen und/oder einer Zink-haltigen Zubereitung.

US 2009/099274 A1 offenbart PU- oder PIR-Hartschaumstoff, hergestellt aus einer Zusammensetzung umfassend eine Isocyanat-Komponente, eine Polyol-Komponente, ein Treibmittel, Aminbasierenden Katalysator und Zink-Katalysator.

WO 2019/122923 A1 offenbart PU- oder PIR-Hartschaumstoff, hergestellt aus Polyisocyanat, Polyethercarbonat und Katalysator basierend auf Zink.

EP 0 010 407 A1 offenbart ein Verfahren zur Herstellung von PU-Schaum in Gegenwart von Gelkatalysatoren, welche Zink-Caboxylate enthalten.

Die konkrete Aufgabe der vorliegenden Erfindung war es nun, die Bereitstellung von Polyurethan- oder Polyisocyanurat-Schaumstoffen, vorzugsweise Polyurethan- oder Polyisocyanurat-Hartschaumstoffen unter Einsatz von Anteilen, vorzugsweise hohen Anteilen, an mindestens einem Recycling-Polyol, zu ermöglichen, wobei deren Gebrauchseigenschaften, insbesondere die Stauchhärte und/oder Eindrückhärte nach kurzer Reaktionszeit, sowie die Oberflächenqualität des Schaumstoffs, nicht nachteilig durch den Einsatz des Recycling-Polyols beeinflusst werden.

Diese Aufgabe wird gelöst vom Gegenstand der Erfindung. Der Gegenstand der Erfindung ist eine Zusammensetzung zur Herstellung von Polyurethan- oder Polyisocyanurat-Schaumstoff, umfassend eine Polyisocyanat-Komponente, eine Polyolkomponente, welche mindestens ein Reycling-Polyol umfasst, mindestens ein tertiäres Amin, optional mindestens einen Schaumstabilisator, optional mindestens ein Treibmittel,
wobei die Zusammensetzung zusätzlich mindestens eine zusätzliche Stickstoff-haltige Verbindung V enthält, vorzugsweise ausgewählt aus der Gruppe bestehend aus Amine, Amin-Alkoxylate, Aminosäuren, Amine mit mehreren Säure-Funktionen und modifizierte Phenole, welche mindestens zwei N-Atome aufweisen, bevorzugt ausgewählt aus der Gruppe bestehend aus N,N,N',N'-Tetrakis(2-hydroxypropyl)ethylendiamin, N,N,N',N'-Tetrakis(2-hydroxyethyl)ethylendiamin, 2-[[2-[2-(Dimethylamino)ethoxy]ethyl]methylamino]ethanol, Fettamin-Ethoxylate, wie Talkfettamin-Ethoxylat, Cocoamin-Ethoxylat, Cetyl/Stearyl-Amin-Ethoxylat oder PEG-3-Talg-Aminopropylamin, PPG-3-Talg-Aminopropylamin, Glycin, Lysin, Arginin, Sarkosin, Ethylendiamintetraacetat, Ethylendiamintriacetat-kokosalkylacetamid und modifizierte Phenole, welche mindestens zwei N-Atome aufweisen, sowie zusätzlich mindestens ein Zink(II)-Carboxylat enthält, mit der Maßgabe, dass das enthaltene Zink(II)-Carboxylat in stöchiometrischer Form eingesetzt wird, also mit Zn(II) und Carboxylat im molaren Verhältnis von 1 zu 2.

Es konnte gefunden werden, dass bei Einsatz erfindungsgemäßer Zusammensetzungen bei der PU- und PIR-Schaumstoffstoffherstellung, Schaumstoffe auch mit hohen Recycling-Polyol-Anteilen mit verbesserten Gebrauchseigenschaften ermöglicht werden. Insbesondere konnte eine verbesserte Aushärtung der Schaumstoffe erreicht werden. Auch die Fließfähigkeit der Reaktionsmischung wurde nicht negativ beeinflusst und es konnte eine Verbesserung der Oberflächenqualitäten beobachtet werden.

Ein weiterer Vorteil der Erfindung ist außerdem die gute ökotoxikologische Einstufung der verwendbaren Chemikalien, insbesondere der Zink(II)-Carboxylate, im Vergleich zu üblicherweise eingesetzen Schwermetallverbindungen basierend auf Sn, Pb, etc..

Die erfindungsgemäße Zusammensetzung enthält mindestens eine zusätzliche Stickstoff-haltige Verbindung V, welche vorzugsweise aus der Gruppe der modifizierten Phenole, welche mindestens zwei N-Atome aufweisen, gewählt sein kann.

Es ist bevorzugt, dass die erfindungsgemäße Zusammensetzung mindestens ein modifiziertes Phenol, welches mindestens zwei N-Atome umfasst, enthält, vorzugsweise ausgewählt aus der Gruppe bestehend aus 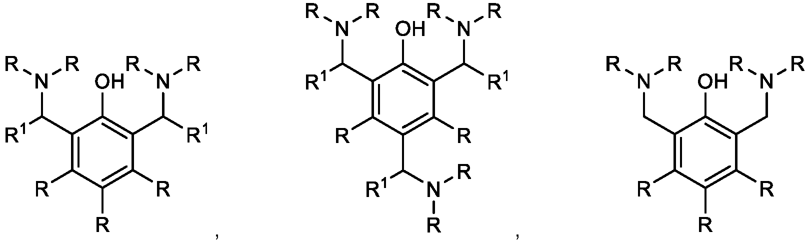 und 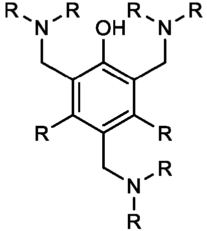 wobei
- R =: jeweils unabhängig voneinander H oder linearer, verzweigter oder cyclischer Kohlenwasserstoffrest mit 1 bis 20 Kohlenstoffatomen, der gesättigt, ungesättigt oder aromatisch sein kann, optional enthaltend Heteroatome wie O oder N,
- R¹ =: jeweils unabhängig voneinander H oder linearer, verzweigter oder cyclischer Kohlenwasserstoffrest mit 1 bis 20 Kohlenstoffatomen, der gesättigt, ungesättigt oder aromatisch sein kann,
besonders bevorzugt ausgewählt aus der Gruppe bestehend aus 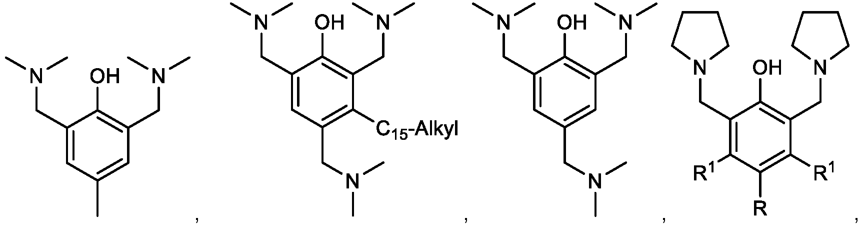 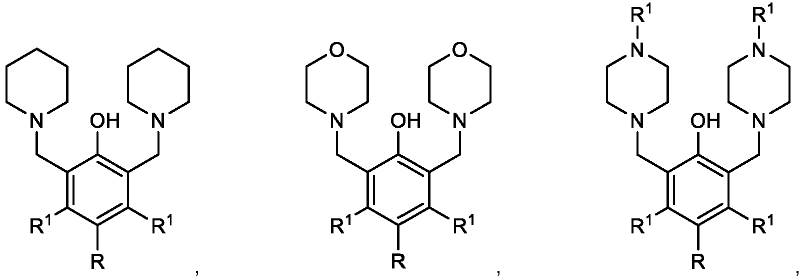 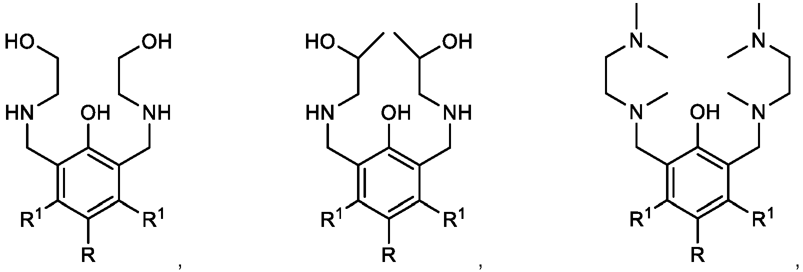 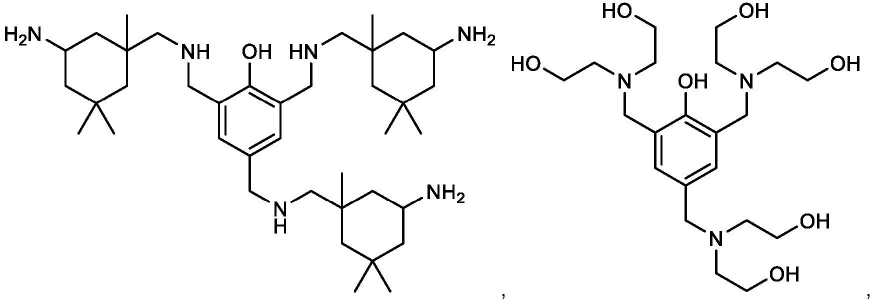 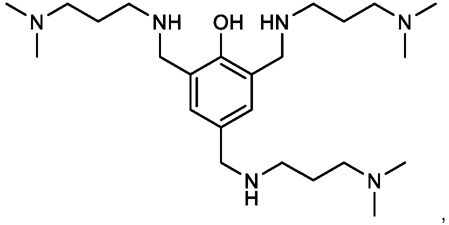 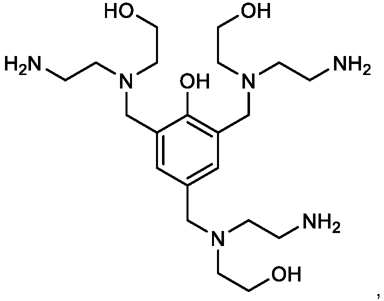 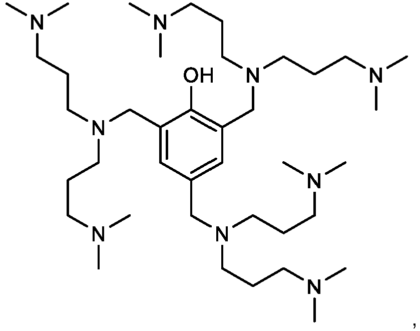 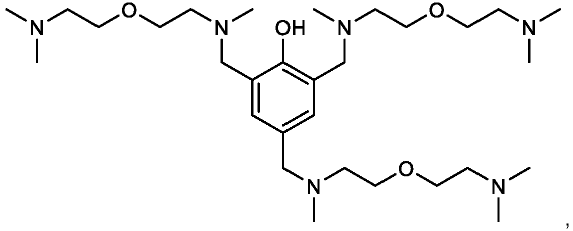 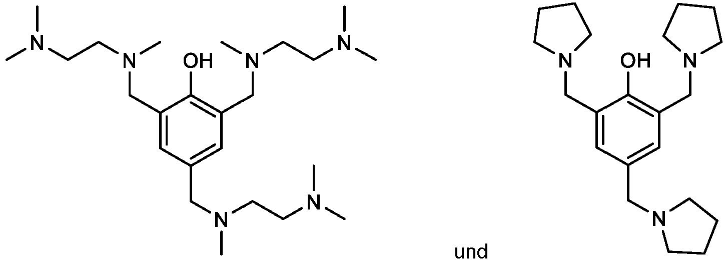 wobei
- R =: jeweils unabhängig voneinander H oder linearer, verzweigter oder cyclischer Kohlenwasserstoffrest mit 1 bis 20 Kohlenstoffatomen, der gesättigt, ungesättigt oder aromatisch sein kann, optional enthaltend Heteroatome wie O oder N,
- R¹ =: jeweils unabhängig voneinander H oder linearer, verzweigter oder cyclischer Kohlenwasserstoffrest mit 1 bis 20 Kohlenstoffatomen, der gesättigt, ungesättigt oder aromatisch sein kann,
ganz besonders bevorzugt ausgewählt aus der Gruppe bestehend aus
2,6-Bis[(dimethylamino)methyl]-4-methyl-phenol, 2,4,6-Tris[(dimethylamino)methyl]cardanol, 2,4,6-Tris[(dimethylamino)methyl]phenol, 2,6-Bis[(dimethylamino)methyl]cardanol, 2,4,6-Tris[(hydroxy-ethylamino)methyl]phenol, 2,4,6-Tris[(hydroxypropylamino)methyl]phenol und 2,4,6-Tris[(dimethy-laminopropylamino)methyl]phenol.

Die erfindungsgemäße Zusammensetzung enthält mindestens ein Zink(II)-Carboxylat, mit der Maßgabe, dass das enthaltene Zink(II)-Carboxylat in stöchiometrischer Form eingesetzt wird, also mit Zn(II) und Carboxylat im molaren Verhältnis von 1 zu 2.

Es ist bevorzugt, dass das mindestens eine Zink(II)-Carboxylat ausgewählt ist aus der Gruppe bestehend aus Zink(II)-acetat, Zink(II)-propionat, Zink(II)-pivalat, Zink(II)-2-ethylhexanoat (Zink(II)-octoat), Zink(II)-isononanoat (Zink(II)-3,5,5-trimethylhexanoat), Zink(II)-neodecanoat, Zink(II)-ricinoleat, Zink(II)-palmitat, Zink(II)-stearat, Zink(II)-oleat, Zink(II)-laurat, Zink(II)-napthenat, Zink(II)-benzoat, Zink(II)-laktat, Zink(II)-glycinat, Zink(II)-hippurat, Zink(II)-citrat und Zink(II)-Seifen,
wobei der Einsatz von Zink(II)-acetat, Zink(II)-propionat und/oder Zink(II)-ricinoleat ganz besonders bevorzugt ist.

Vorzugsweise liegen in der Zusammensetzung insgesamt enthaltenes Zink(II)-Carboxylat und insgesamt enthaltene Sticktoff-haltige Verbindung V im Mengenverhältnis von 1 zu 0,5 bis 1 zu 5 Gewichtsteilen zueinander vor.

Die erfindungsgemäße Zusammensetzung enthält mindestens ein tertiäres Amin. Vorzugsweise genügt das mindestens eine tertiäre Amin der Formel (X), 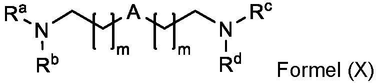 mit
m jeweils unabhängig voneinander: 1 oder 2,
A ist O, S oder N-R^{e},
R^{a}, R^{b}, R^{c}, R^{d} und R^{e}, jeweils unabhängig voneinander, gleiche oder verschiedene lineare, verzweigte oder cyclische Alkylreste mit 1 bis 20 Kohlenstoffatomen,
bevorzugt ist das mindestens eine tertiäre Amin der Formel (X) ausgewählt aus der Gruppe bestehend aus Pentamethyldiethylentriamin, Bis-(2-dimethylaminoethyl)ether, Tris(dimethylaminopropyl)amin, N-[2-[2-(dimethylamino)ethoxy]ethyl]-N-methyl-1,3-propanediamin, Diisopropyltrimethyldiethylentriamin, Bis-(dimethylaminopropyl)methylamin, Trimethylaminoethylethanolamin, Bis-(2-isopropylmethylaminoethyl)ether, Bis-(2-isobutylmethylaminoethyl)ether, N,N'-diisopropyl-N,N'-dimethyl-bis(aminoethyl)ether, N,N,N'-triisopropyl-N'-methyl-bis(aminoethyl)ether und N,N'-diisobutyl-N,N'-dimethyl-bis(aminoethyl)ether.

Es ist ganz besonders bevorzugt, wenn in der erfindungsgemäßen Zusammensetzung überdies mindestens ein zusätzlicher Trimerisierungskatalysator enthalten ist,
vorzugsweise ausgewählt aus Carboxylaten von Ammonium, Kalium und/oder anderen Alkali- oder Erdalkalimetallen,
bevorzugt ausgewählt aus Kalium-Carboxylaten und Carboxylaten von Ammonium-Kationen,
ganz besonders bevorzugt ausgewählt aus der Gruppe bestehend aus Kaliumacetat, Kaliumformiat, Kaliumpropionat, Kaliumbutanoat, Kaliumpentanoat, Kaliumhexanoat, Kaliumheptanoat, Kalium-2-ethylhexanoat, Kaliumpivalat, Kaliumoctoat, Kaliumbutyrat, Kaliumisobutyrat, Kaliumnonanoat, Kaliumdecanoat, Kaliumrizinoleat, Kaliumstearat, Kaliumneodecanoat, und Carboxylaten von Tetramethylammonium, Tetraethylammonium, Triethylmethylammonium, Tetrapropylammonium, Tetrabutylammonium, Dimethyldiallylammonium, Trimethyl-(2-hydroxypropyl)ammonium, Triethyl-(2-hydroxypropyl)ammonium, Tripropyl-(2-hydroxypropyl)ammonium, Tributyl-(2-hydroxypropyl-)ammonium, Trimethyl-(2-hydroxyethyl)ammonium, Triethyl-(2-hydroxyethyl)ammonium, Tripropyl-(2-hydroxyethyl)ammonium, Tributyl-(2-hydroxyethyl)ammonium, Dimethylbenzyl-(2-hydroxyethyl)-ammonium und/oder Dimethylbenzyl-(2-hydroxypropyl)ammonium, wobei die Carboxylate vorzugsweise Acetate, Propionate, Butanoate, Pentanoate Pivalate, Octoate, Nonanoate, Decanoate, Neodecanoate, Rizinoleate und/oder Stearate sind.

Die erfindungsgemäße Zusammensetzung enthält eine Polyol-Komponente, welche mindestens ein Recycling-Polyol umfasst.

Vorzugsweise können z.B. Recycling-Polyole eingesetzt werden, die durch das chemische Recycling von Polyurethan, insbesondere Polyurethanschaumstoff und besonders bevorzugt Polyurethan-hartschaumstoff, gewonnen werden, und/oder Recycling-Polyole, die aus anderen recycelfähigen Kunststoffen wie Polyestern, Polycarbonaten und/oder Polyamiden, insbesondere thermoplastischen Polyestern, gewonnen wurden.

Das mindestens eine Recycling-Polyol wird in einer Gesamtmenge von vorzugsweise mindestens 30 Gewichtsteilen, bevorzugt mehr als 50 Gewichtsteilen, besonders bevorzugt 70 bis 100 Gewichtsteilen, bezogen auf 100 Gewichtsteile der gesamten Polyol-Komponente eingesetzt.

Bevorzugt ist es, wenn das mindestens eine Recycling-Polyol durch Depolymerisation von Polyurethan oder PIR, bevorzugt Polyurethan- oder PIR-Schaumstoff, weiter bevorzugt Polyurethan- oder PIR-Hartschaumstoff, besonders bevorzugt Polyether- und/oder Polyesterpolyol enthaltenden Polyurethan- oder PIR-Schaumstoff, vorzugsweise -Hartschaumstoff, mittels Hydrolyse, Alkoholyse, Glykolyse, Aminolyse oder Acidolyse, bevorzugt Alkoholyse, Glykolyse oder Aminolyse erhalten wurde, wobei auch verschiedene Recycling-Polyole aus unterschiedlichen Depolymerisationsverfahren, vorzugsweise Polyurethan-Depolymerisationsverfahren, kombiniert werden können.

Es ist ganz besonders bevorzugt, wenn das mindestens eine Recycling-Polyol durch Depolymerisation von Abfall-Polyurethan- und/oder PIR-Schaumstoffen erhalten wurde.

Ein PU- oder PIR-Abfallschaumstoff ist vorzugsweise ein PU- oder PIR-Schaumstoff, welcher
(i) aus Produktionsabfällen resultiert, die während der PU- oder PIR-Schaumstoffherstellung erhalten werden, wie zum Beispiel Schnittresten, Sägeabfall oder Material, welches die Qualitätskontrolle nicht besteht,
   und/oder
(ii) aus PU- oder PIR Schaumstoffen resultiert, die das Ende ihrer Lebensdauer erreicht haben, wie zum Beispiel Schaumstoffen aus gebrauchten Kühlgeräten, gebrauchte Dämmmaterialien bzw. Dämmplatten, gebrauchte Dichtschäume, gebrauchte Matratzen, gebrauchte Möbel, gebrauchte Schallabsorptionsmaterialien, gebrauchte Verpackungsschäume oder Schaumstoffe aus gebrauchten Fahrzeugen.

Es ist bevorzugt, wenn das mindestens eine Recycling-Polyol mindestens ein Polyesterpolyol enthält, dass aus einem Abfall-Polyester erhalten wurde. Ein solches Recycling-Polyol wird im Zusammenhang mit dieser Erfindung auch als Recycling-Polyesterpolyol bezeichnet. Bevorzugt sind dabei Recycling-Polyesterpolyole, die chemisch gesehen auf Diolen und aromatischen und/oder aliphatischen Dicarbonsäuren basieren, wobei Polyalkylen- und/oder Polyoxyalkylen-Phthalat, -Isophthalat und/oder -Terephthalat-haltiges Recycling-Polyesterpolyol, insbesondere Polyethylenterephthalat-haltiges Recycling-Polyesterpolyol, besonders bevorzugt ist, wobei auch verschiedene Recycling-Polyesterpolyole kombiniert werden können.

Dabei ist der Einsatz von Recycling-Polyesterpolyol, erhalten durch das Recycling von Polyestern, die das Ende ihrer Lebenszeit erreicht haben, wie z.B. Polyester-Plastikflaschen, -Textilien oder - Teppiche, ganz besonders bevorzugt.

Die erfindungsgemäße Zusammensetzung enthält optional mindestens ein Treibmittel. Es ist bevorzugt, wenn die Zusammensetzung als Treibmittel
(i) mindestens einen Kohlenwasserstoff mit 3, 4 oder 5 Kohlenstoff-Atomen, bevorzugt cyclo-, iso- und/oder n-Pentan,
   und/oder
(ii) mindestens ein Hydrofluoroolefin und/oder mindestens ein Hydrohaloolefin, bevorzugt 1234ze, 1234yf, 1224yd, 1233zd(E) und/oder 1336mzz,
   sowie
zwingend Wasser umfasst.

Die erfindungsgemäße Zusammensetzung ermöglicht die Herstellung von Polyurethan- oder Polyisocyanurat-Schaumstoff, vorzugsweise Polyurethan- oder Polyisocyanurat-Hartschaumstoff.

Ein weiterer Gegenstand der Erfindung ist ein Verfahren zur Herstellung von Polyurethan- oder Polyisocyanurat-Schaumstoff, vorzugsweise Polyurethan- oder Polyisocyanurat-Hartschaumstoff, durch Umsetzung einer Polyolkomponente mit einer Polyisocyanatkomponente, wobei die Umsetzung in Gegenwart mindestens eines tertiären Amins erfolgt, und wobei die Polyolkomponente mindestens ein Recycling-Polyol umfasst,
und wobei bei der Umsetzung zusätzlich mindestens eine Stickstoff-haltige Verbindung V eingesetzt wird, vorzugsweise ausgewählt aus der Gruppe bestehend aus Amine, Amin-Alkoxylate, Aminosäuren, Amine mit mehreren Säure-Funktionen und modifizierte Phenole, welche mindestens zwei N-Atome aufweisen, bevorzugt ausgewählt aus der Gruppe bestehend aus N,N,N',N'-Tetrakis(2-hydroxypropyl)ethylendiamin, N,N,N',N'-Tetrakis(2-hydroxyethyl)ethylendiamin, 2-[[2-[2-(Dimethylamino)ethoxy]ethyl]methylamino]ethanol, Fettamin-Ethoxylate, wie Talkfettamin-Ethoxylat, Cocoamin-Ethoxylat, Cetyl/Stearyl-Amin-Ethoxylat oder PEG-3-Talg-Aminopropylamin, PPG-3-Talg-Aminopropylamin, Glycin, Lysin, Arginin, Sarkosin, Ethylendiamintetraacetat, Ethylendiamintriacetat-kokosalkylacetamid, und modifizierte Phenole, welche mindestens zwei N-Atome aufweisen, sowie
zusätzlich mindestens ein Zink(II)-Carboxylat eingesetzt wird, mit der Maßgabe, dass das enthaltene Zink(II)-Carboxylat in stöchiometrischer Form eingesetzt wird, also mit Zn(II) und Carboxylat im molaren Verhältnis von 1 zu 2,
besonders bevorzugt wird das Verfahren unter Einsatz einer erfindungsgemäßen Zusammensetzung, insbesondere bevorzugt unter Einsatz einer erfindungsgemäßen Zusammensetzung nach einem der Ansprüche 1 bis 10, durchgeführt.

Dabei ist es ganz besonders bevorzugt, wenn das insgesamt enthaltene mindestens eine Recycling-Polyol in einer Gesamtmenge von mindestens 30 Gewichtsteilen, vorzugsweise mehr als 50 Gewichtsteilen, insbesondere bevorzugt 70 bis 100 Gewichtsteile, bezogen auf 100 Gewichtsteile der gesamten Polyol-Komponente eingesetzt wird.

Das erfindungsgemäße Verfahren ermöglicht die Herstellung von Polyurethan- oder Polyisocyanurat-Schaumstoff, vorzugsweise Polyurethan- oder Polyisocyanurat-Hartschaumstoff.

Ein weiterer Gegenstand der Erfindung ist somit ein Polyurethan- oder Polyisocyanurat-Schaumstoff, insbesondere Polyurethan- oder Polyisocyanurat-Hartschaumstoff, hergestellt gemäß dem erfindungsgemäßen Verfahren.

Ein weiterer Gegenstand der Erfindung ist die Verwendung von mindestens einer Stickstoff-haltigen Verbindung V, vorzugsweise ausgewählt aus der Gruppe bestehend aus Amine, Amin-Alkoxylate, Aminosäuren, Amine mit mehreren Säure-Funktionen und modifizierte Phenole, welche mindestens zwei N-Atome aufweisen, bevorzugt ausgewählt aus der Gruppe bestehend aus N,N,N',N'-Tetrakis(2-hydroxypropyl)ethylendiamin, N,N,N',N'-Tetrakis(2-hydroxyethyl)ethylendiamin, 2-[[2-[2-(Dimethylamino)ethoxy]ethyl]methylamino]ethanol, Fettamin-Ethoxylate, wie Talkfettamin-Ethoxylat, Cocoamin-Ethoxylat, Cetyl/Stearyl-Amin-Ethoxylat oder PEG-3-Talg-Aminopropylamin, PPG-3-Talg-Aminopropylamin, Glycin, Lysin, Arginin, Sarkosin, Ethylendiamintetraacetat, Ethylendiamintriacetat-kokosalkylacetamid, und modifizierte Phenole, welche mindestens zwei N-Atome aufweisen,
zusammen mit mindestens einem Zink(II)-Carboxylat, mit der Maßgabe, dass das enthaltene Zink(II)-Carboxylat in stöchiometrischer Form eingesetzt wird, also mit Zn(II) und Carboxylat im molaren Verhältnis von 1 zu 2,
in Verfahren zur Herstellung von Polyurethan- oder Polyisocyanurat-Schaumstoff, insbesondere Polyurethan- oder Polyisocyanurat-Hartschaumstoff, durch Umsetzung einer Polyolkomponente mit einer Polyisocyanatkomponente, wobei die Umsetzung in Gegenwart mindestens eines tertiären Amins erfolgt, und wobei die Polyolkomponente mindestens ein Recycling-Polyol umfasst,
zur Verbesserung der Gebrauchseigenschaften des resultierenden Polyurethan- oder Polyisocyanurat-Schaumstoffs, vorzugsweise Polyurethan- oder Polyisocyanurat-Hartschaumstoffs, insbesondere zur Verbesserung der Oberflächenqualität und zur Erhöhung der Stauchhärte des resultierenden Polyurethan- oder Polyisocyanurat-Hartschaumstoffs bzw. um die Erhöhung der Stauchhärte zu einem frühen Zeitpunkt zu erreichen, im Vergleich zu Polyurethan- oder Polyisocyanurat-Schaumstoffen, vorzugsweise -Hartschaumstoffen, die ohne Zink(II)-Carboxylat hergestellt wurden (Stauchhärte bestimmbar nach DIN EN ISO 844:2014-11). Dabei ist unter dem Ausdruck "früher Zeitpunkt" vorzugsweise ein Zeitpunkt im Bereich von 4 Minuten bis 9 Minuten, bevorzugt 6:30 Minuten, nach Start der Polymerisation, vorzugsweise nach Start der Polymerisation durch Zugabe der Polyisocyanat-Komponente, zu verstehen.

Ein weiterer Gegenstand der Erfindung ist die Verwendung einer Zink(II)-Carboxylat-haltigen Zubereitung, welche umfasst:
i) mindestens ein Zink(II)-Carboxylat, vorzugsweise wie in Anspruch 1 oder 3 definiert, in einer Gesamtmenge von 2 bis 50 Gew.-%, vorzugsweise 5 bis 45 Gew.-%, besonders bevorzugt 10 bis 40 Gew%, mit der Maßgabe, dass das enthaltene Zink(II)-Carboxylat in stöchiometrischer Form eingesetzt wird, also mit Zn(II) und Carboxylat im molaren Verhältnis von 1 zu 2,
ii) optional mindestens ein Trägermedium, in einer Gesamtmenge von 0 bis 95 Gew.-%, vorzugsweise 10 bis 90 Gew.-%, besonders bevorzugt 20 bis 70 Gew%,
iii) mindestens eine Stickstoff-haltige Verbindung V, vorzugsweise wie in einem der Ansprüche 1 oder 2 angegeben, in einer Gesamtmenge von 1 bis 90 Gew.-%, vorzugsweise 2 bis 60 Gew.-%, besonders bevorzugt 5 bis 50 % Gew-%,

Gew.-% jeweils bezogen auf die gesamte Zubereitung, wobei die Komponenten i) bis iii) zusammen vorzugsweise mindestens 51 Gew.-% der gesamten Zubereitung ausmachen müssen,
sowie vorzugsweise zusätzlich umfassend
   iv) mindestens ein tertiäres Amin, vorzugsweise wie in Anspruch 5 angegeben, in Mengen von 1 bis 30 Gew-%, bevorzugt 2 bis 25 Gew-%, besonders bevorzugt 5 bis 20 Gew-%,
   v) optional mindestens einen Trimerisierungskatalysator, vorzugsweise wie in Anspruch 6 angegeben, in Mengen von 1 bis 90 Gew.-%, vorzugsweise 2 bis 60 Gew.-%, besonders bevorzugt 5 bis 50 % Gew-%, Gew.-% wiederum jeweils bezogen auf die gesamte Zubereitung,
wobei die Komponenten i) bis v) zusammen vorzugsweise mindestens 52 Gew.-% der gesamten Zubereitung ausmachen müssen,
zur Katalyse bei der Herstellung von Polyurethan- oder Polyisocyanurat-Schaumstoff unter Einsatz von mindestens einem Recycling-Polyol,
zur Verbesserung der Gebrauchseigenschaften des resultierenden Polyurethan- oder Polyisocyanurat-Schaumstoffs, vorzugsweise Polyurethan- oder Polyisocyanurat-Hartschaumstoffs, insbesondere zur Verbesserung der Oberflächenqualität sowie zur Erhöhung der Stauchhärte des resultierenden Polyurethan- oder Polyisocyanurat-Schaumstoffs, vorzugsweise -Hartschaumstoffs bzw. um die Erhöhung der Stauchhärte zu einem frühen Zeitpunkt zu erreichen, im Vergleich zu Polyurethan- oder Polyisocyanurat-Schaumstoffen, vorzugsweise -Hartschaumstoffen, die ohne Zink(II)-Carboxylat hergestellt wurden (Stauchhärte bestimmbar nach DIN EN ISO 844:2014-11). Dabei ist unter dem Ausdruck "früher Zeitpunkt" vorzugsweise ein Zeitpunkt im Bereich von 4 Minuten bis 9 Minuten, bevorzugt 6:30 Minuten, nach Start der Polymerisation, vorzugsweise nach Start der Polymerisation durch Zugabe der Polyisocyanat-Komponente, zu verstehen.

Nachfolgend werden einzelne, bevorzugt einsetzbare Komponenten noch genauer beschrieben.

Als Polyolkomponente geeignete Polyole im Sinne der vorliegenden Erfindung sind alle organischen Verbindungen mit mindestens zwei gegenüber Isocyanaten reaktiven Gruppen, vorzugsweise OH-Gruppen, sowie deren Zubereitungen. Insbesondere umfasst die Polyolkomponente mindestens eine organische Verbindung, die mindestens zwei Hydroxylgruppen (-OH) enthält. Vorzugsweise können Mischungen aus mindestens zwei geeigneten Polyolen eingesetzt werden.

Die Polyolkomponente enthält mindestens ein Recycling-Polyol, wie weiter oben bereits erläutert.

Bevorzugte Polyole sind alle zur Herstellung von Polyurethan-Systemen, insbesondere Polyurethan-Beschichtungen, Polyurethan-Elastomeren oder Polyurethan-Schaumstoffen üblicherweise einsetzbaren Polyetherpolyole und/oder Polyesterpolyole und/oder hydroxylgruppenhaltigen aliphatischen Polycarbonate, insbesondere Polyetherpolycarbonatpolyole und/oder Polyole natürlicher Herkunft, sogenannte "natural oil based polyols" (NOPs). Vorzugsweise besitzen die Polyole eine Funktionalität von 1,8 bis 8 und zahlengemittelte Molekulargewichte vorzugsweise im Bereich von 500 bis 15000 g/mol. Vorzugsweise kommen die Polyole mit OH-Zahlen im Bereich von 10 bis 1200 mg KOH/g zum Einsatz.

Einsetzbar sind vorzugsweise Polyetherpolyole. Diese können nach bekannten Verfahren hergestellt werden, beispielsweise durch anionische Polymerisation von Alkylenoxiden in Gegenwart von Alkalihydroxiden, Alkalialkoholaten oder Aminen als Katalysatoren und unter Zusatz mindestens eines Startermoleküls, dass bevorzugt 2 oder 3 reaktive Wasserstoffatome gebunden enthält oder durch kationische Polymerisation von Alkylenoxiden in Gegenwart von Lewis-Säuren wie beispielsweise Antimonpentachlorid oder Bortrifluorid-Etherat oder durch Doppelmetallcyanidkatalyse. Geeignete Alkylenoxide enthalten 2 bis 4 Kohlenstoffatome im Alkylenrest. Beispiele sind Tetrahydrofuran, 1,3-Propylenoxid, 1,2- bzw. 2,3-Butylenoxid; vorzugsweise werden Ethylenoxid und 1,2-Propylenoxid eingesetzt. Die Alkylenoxide können einzeln, kumulativ, blockweise, alternierend nacheinander oder als Mischungen verwendet werden. Als Startmoleküle kommen insbesondere Verbindungen mit mindestens 2, vorzugsweise 2 bis 8 Hydroxylgruppen oder mit mindestens zwei primären Aminogruppen im Molekül zum Einsatz. Als Startermoleküle eingesetzt werden können z.B. Wasser, 2-, 3- oder 4-wertige Alkohole wie Ethylenglykol, 1,2- und 1,3-Propandiol, Diethylenglykol, Dipropylenglykol, Glycerin, Trimethylolpropan, Pentaerythrit, Rizinusöl usw., höhere polyfunktionelle Polyole, insbesondere Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin, oder Amine wie Anilin, EDA, TDA, MDA und PMDA, besonders bevorzugt TDA und PMDA. Die Wahl des geeigneten Startermoleküls ist abhängig von dem jeweiligen Anwendungsgebiet des resultierenden Polyetherpolyols bei der Polyurethanherstellung.

Einsetzbar sind vorzugsweise Polyesterpolyole. Diese basieren auf Estern mehrwertiger aliphatischer oder aromatischer Carbonsäuren, bevorzugt mit 2 bis 12 Kohlenstoffatomen. Beispiele für aliphatische Carbonsäuren sind Bernsteinsäure, Glutarsäure, Adipinsäure, Korksäure, Azelainsäure, Sebacinsäure, Decandicarbonsäure, Maleinsäure und Fumarsäure. Beispiele für aromatische Carbonsäuren sind Phthalsäure, Isophthalsäure, Terephthalsäure und die isomeren Naphthalindicarbonsäuren. Die Polyesterpolyole werden durch Kondensation dieser mehrwertigen Carbonsäuren mit mehrwertigen Alkoholen, vorzugsweise von Diolen oder Triolen mit 2 bis 12, besonders bevorzugt mit 2 bis 6 Kohlenstoffatomen, bevorzugt Trimethylolpropan und Glycerin erhalten.

Besonders bevorzugt ist der Einsatz von Recycling-Polyesterpolyolen.

Einsetzbar sind vorzugsweise Polyetherpolycarbonatpolyole. Dies sind Polyole, welche Kohlenstoffdioxid als Carbonat gebunden enthalten. Da Kohlenstoffdioxid bei vielen Prozessen in der chemischen Industrie in großen Mengen als Nebenprodukt entsteht, ist die Verwendung von Kohlendioxid als Comonomer in Alkylenoxid-Polymerisationen aus kommerzieller Sicht von besonderem Interesse. Ein teilweiser Ersatz von Alkylenoxiden in Polyolen durch Kohlendioxid hat das Potential, die Kosten für die Herstellung von Polyolen deutlich zu senken. Außerdem ist die Verwendung von CO₂ als Comonomer ökologisch sehr vorteilhaft, da diese Reaktion die Umsetzung eines Treibhausgases zu einem Polymer darstellt. Die Herstellung von Polyetherpolycarbonatpolyolen durch Anlagerung von Alkylenoxiden und Kohlendioxid an H-funktionelle Startsubstanzen unter Verwendung von Katalysatoren ist seit langem bekannt. Verschiedene Katalysatorsysteme können hierbei zum Einsatz kommen: Die erste Generation stellten heterogene Zink- oder Aluminiumsalze dar, wie sie beispielsweise in US-A 3900424 oder US-A 3953383 beschrieben sind. Des Weiteren sind mono- und binukleare Metallkomplexe zur Copolymerisation von CO₂ und Alkylenoxiden erfolgreich eingesetzt worden (vgl. z.B. WO 2010/028362, WO 2009/130470, WO 2013/022932 oder WO 2011/163133). Die wichtigste Klasse von Katalysatorsystemen für die Copolymerisation von Kohlenstoffdioxid und Alkylenoxiden stellen die Doppelmetallcyanidkatalysatoren, auch als DMC-Katalysatoren bezeichnet, dar (vgl. z.B. US-A 4500704, WO 2008/058913). Geeignete Alkylenoxide und H-funktionelle Startsubstanzen sind solche, die auch zur Herstellung von carbonatfreien Polyetherpolyolen - wie oben beschrieben - eingesetzt werden.

Einsetzbar sind vorzugsweise Polyole auf Basis nachwachsender Rohstoffe "Natural oil based polyols" (NOPs). NOPs zur Herstellung von Polyurethanschaumstoffen sind mit Blick auf die langfristig begrenzte Verfügbarkeit fossiler Ressourcen, namentlich Öl, Kohle und Gas, und vor dem Hintergrund steigender Rohölpreise von zunehmendem Interesse und bereits vielfach in solchen Anwendungen beschrieben (vgl. z.B. WO 2005/033167; US 2006/0293400, WO 2006/094227, WO 2004/096882, US 2002/0103091, WO 2006/116456 und EP 1678232). Mittlerweile sind auf dem Markt eine Reihe dieser Polyole von verschiedenen Herstellern verfügbar (vgl. z.B. WO 2004/020497, US 2006/0229375, WO 2009/058367). In Abhängigkeit vom Basis-Rohstoff (z.B. Sojabohnenöl, Palmöl oder Rizinusöl) und die daran angeschlossene Aufarbeitung ergeben sich Polyole mit unterschiedlichem Eigenschaftsbild. Hierbei können im Wesentlichen zwei Gruppen unterschieden werden: a) Polyole auf Basis nachwachsender Rohstoffe, die soweit modifiziert werden, dass sie zu 100 % zur Herstellung von Polyurethanen eingesetzt werden können (vgl. z.B. WO 2004/020497, US 2006/0229375); b) Polyole auf Basis nachwachsender Rohstoffe, die bedingt durch ihre Aufarbeitung und Eigenschaften nur zu einem gewissen Anteil das petrochemisch basierte Polyol ersetzen können (vgl. z.B. WO 2009/058367).

Eine weitere Klasse von vorzugsweise einsetzbaren Polyolen stellen die sogenannten Füllkörperpolyole (Polymerpolyole) dar. Diese zeichnen sich dadurch aus, dass sie feste organische Füllstoffe vorzugsweise bis zu einem Feststoffgehalt von 40 % oder mehr in disperser Verteilung enthalten. Einsetzbar sind unter anderem SAN-, PHD- und PIPA-Polyole. SAN-Polyole sind hochreaktive Polyole, welche ein Copolymer auf der Basis von Styrol/Acrylnitril (SAN) dispergiert enthalten. PHD-Polyole sind hochreaktive Polyole, welche Polyharnstoff ebenfalls in dispergierter Form enthalten. PIPA-Polyole sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Bevorzugt können Polyole zum Einsatz kommen, die eine Molmasse kleiner als 1000 g/mol haben. Weiter bevorzugt sind Polyole mit einer Funktionalität kleiner 3. Insbesondere ist es bevorzugt keine Triole mit Molmassen über 1000 g/mol einzusetzen. Dies entspricht jeweils einer besonders bevorzugten Form der Erfindung.

Ein bevorzugtes Verhältnis von Isocyanat und Polyol, ausgedrückt als Index der Formulierung, d.h. als stöchiometrisches Verhältnis von Isocyanat-Gruppen zu gegenüber Isocyanat-reaktiven Gruppen (z.B. OH-Gruppen, NH-Gruppen) multipliziert mit 100, liegt im Bereich von 10 bis 1000, bevorzugt 40 bis 700, bevorzugter 60 bis 600, weiter bevorzugt 150 bis 550, noch weiter bevorzugt 250 bis 500, ganz besonders bevorzugt 300 bis 450. Ein Index von 100 steht für ein molares Verhältnis der reaktiven Gruppen von 1 zu 1.

Vorzugsweise können Polyesterpolyole auf Basis von aromatischen Carbonsäuren in einer Gesamtmenge von mehr als 50 Gewichtsteilen, bevorzugt mehr als 70 Gewichtsteilen, bezogen auf 100 Gewichtsteile der gesamten Polyolkomponente, eingesetzt werden.

Bevorzugte aromatische Polyesterpolyole haben OH-Zahlen im Bereich von 150 bis 400 mg KOH/g, bevorzugt 170 bis 350, ganz besonders bevorzugt 180 bis 300 mg KOH/g.

Als Polyisocyanat-Komponente wird vorzugsweise mindestens ein organisches Polyisocyanat mit mindestens zwei Isocyanat-Funktionen eingesetzt.

Geeignete Polyisocyanate im Sinne dieser Erfindung sind alle Isocyanate, die mindestens zwei Isocyanat-Gruppen enthalten. Vorzugsweise können alle an sich bekannten aliphatischen, cycloaliphatischen, arylaliphatischen und vorzugsweise aromatischen mehrfunktionalen Isocyanate verwendet werden. Besonders bevorzugt werden Isocyanate in einem Bereich von 60 bis 200 mol% relativ zu der Summe der Isocyanat-verbrauchenden Komponenten eingesetzt.

Vorzugsweise können Mischungen aus mindestens zwei geeigneten Polyisocyanaten eingesetzt werden.

Beispielhaft genannt werden können hier vorzugsweise Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylen-diisocyanat-1,5, Tetramethylendiisocyanat-1,4, und vorzugsweise Hexamethylendiisocyanat-1,6 (HMDI), cycloaliphatische Diisocyanate, wie Cyclohexan-1,3- und 1-4-diisocyanat sowie beliebige Gemische dieser Isomeren, 1-Isocyanato-3,35-trimethyl-5-isocyanatomethylcyclohexan (Isophorondiisocyanat oder kurz IPDI), 2,4- und 2,6-Hexahydrotoluylendiisocyanat sowie die entsprechenden Isomerengemische, und vorzugsweise aromatische Di- und Polyisocyanate, wie beispielsweise 2,4- und 2,6-Toluoldiisocyanat (TDI) und die entsprechenden Isomerengemische, Naphthalindiisocyanat, Diethyltoluoldiisocyanat, Mischungen aus 2,4`- und 2,2`-Diphenylmethandiisocyanaten (MDI) und Polyphenylpolymethylenpolyisocyanate (Roh-MDI) und Mischungen aus Roh-MDI und Toluoldiisocyanaten (TDI). Die organischen Di- und Polyisocyanate können einzeln oder in Form ihrer Mischungen eingesetzt werden. Ebenso können entsprechende "Oligomere" der Diisocyanate eingesetzt werden (z.B. IPDI-Trimer auf Basis einer Isocyanurat-, Biuret- und/oder Uretdion-Bildung). Des Weiteren ist der Einsatz von Präpolymeren auf Basis der oben genannten Isocyanate möglich.

Es ist auch möglich, Isocyanate einzusetzen, die durch den Einbau von Urethan-, Uretdion-, Isocyanurat, Allophanat- und anderen Gruppen modifiziert wurden, sogenannte modifizierte Isocyanate.

Besonders bveorzugte organische Polyisocyanate und daher besonders bevorzugt angewendet werden verschiedene Isomere des Toluoldiisocyanat (2,4- und 2,6-Toluoldiisocyanat (TDI), in reiner Form oder als Isomerengemische unterschiedlicher Zusammensetzung), 4,4'-Diphenylmethandiisocyanat (MDI), das so genannte "crude MDI" oder "polymere MDI" (enthält neben dem 4,4`- auch die 2,4`- und 2,2'-lsomeren des MDI und höherkernige Produkte) sowie das als "pure MDI" bezeichnete zweikernige Produkt aus überwiegend 2,4`- und 4,4'-lsomerengemischen bzw. deren Prepolymeren. Beispiele für besonders geeignete Isocyanate sind beispielsweise in EP 1712578, EP 1161474, WO 00/58383, US 2007/0072951, EP 1678232 und der WO 2005/085310 aufgeführt, auf die hier in vollem Umfang Bezug genommen wird.

Optionale Katalysatoren können zusätzlich zu dem mindestens einen Zink(II)-Carboxylat, wie zuvor beschrieben, eingesetzt werden. Als mögliche Katalysatoren können auch das mindestens eine tertiäre Amin der Formel (X) sowie der mindestens eine zusätzliche Trimerisierungskatalysator fungieren, wie zuvor beschrieben.

Geeignete zusätzliche optionale Katalysatoren im Sinne der vorliegenden Erfindung sind alle Verbindungen, die in der Lage sind, die Reaktion von Isocyanaten mit OH- Funktionen, NH-Funktionen oder anderen Isocyanat-reaktiven Gruppen sowie mit Isocyanaten selbst zu beschleunigen. Hierbei kann auf die üblichen aus dem Stand der Technik bekannten Katalysatoren zurückgegriffen werden, umfassend z.B. Amine (cyclische, acyclische; Monoamine, Diamine, Oligomere mit einer oder mehreren Aminogruppen), Ammonium-Verbindungen, metallorganische Verbindungen und Metallsalze, vorzugsweise die des Kalium, Zinn, Eisen, Bismuth. Insbesondere können als Katalysatoren Gemische mehrerer Komponenten eingesetzt werden.

Als optionale Schaumstabilisatoren können dazu aus dem Stand der Technik bekannte Stoffe, vorzugsweise Si-freie Surfactants oder auch organomodifizierte Siloxane eingesetzt werden.

Die Verwendung von solchen Substanzen bei der Herstellung von PU- oder PIR-Schaumstoffen ist bekannt. Hierbei können im Rahmen dieser Erfindung alle Verbindungen optional eingesetzt werden, die die Schaumherstellung unterstützen (Stabilisierung, Zellregulierung, Zellöffnung, etc.). Diese Verbindungen sind aus dem Stand der Technik hinreichend bekannt.

Entsprechende, im Sinne dieser Erfindung einsetzbare Siloxane werden z.B. in den folgenden Patentschriften beschrieben: CN 103665385, CN 103657518, CN 103055759, CN 103044687, US 2008/ 0125503, US 2015/0057384, EP 1520870 A1, EP 1211279, EP 0867464, EP 0867465, EP 0275563. Diese vorgenannten Schriften werden hiermit als Referenz eingeführt und gelten als Teil des Offenbarungsgehaltes der vorliegenden Erfindung. Der Einsatz von Polyether-modifizierten-Siloxanen ist besonders bevorzugt.

Die Verwendung von Treibmitteln ist optional, je nachdem welches Verschäumungsverfahren verwendet wird. Es kann mit chemischen und physikalischen Treibmitteln gearbeitet werden. Die Wahl des Treibmittels hängt hier stark von der Art des Systems ab.

In einer besonders bevorzugten Ausführungsform werden keine HFO als Treibmittel eingesetzt.

Je nach Menge des verwendeten Treibmittels kann ein Schaumstoff mit hoher oder niedriger Dichte hergestellt werden. So können Schaumstoffe vorzugsweise mit Dichten von 5 kg/m³ bis 900 kg/m³ hergestellt werden. Bevorzugte Dichten sind 8 bis 800, besonders bevorzugt 10 bis 600 kg/m³, insbesondere 30 bis 150 kg/m³.

Als physikalische Treibmittel können entsprechende Verbindung mit passenden Siedepunkten eingesetzt werden. Ebenso können chemische Treibmittel eingesetzt werden, die mit NCO-Gruppen unter Freisetzung von Gasen reagieren, wie beispielsweise Wasser oder Ameisensäure. Beispiele für Treibmittel sind verflüssigtes CO₂, Stickstoff, Luft, leichtflüchtige Flüssigkeiten, beispielsweise Kohlenwasserstoffe mit 3, 4 oder 5 Kohlenstoff-Atomen, bevorzugt cyclo-, iso- und/oder n-Pentan, Fluorkohlenwasserstoffe, bevorzugt HFC 245fa, HFC 134a und/oder HFC 365mfc, Fluorchlorkohlenwasserstoffe, bevorzugt HCFC 141b, Hydrofluoroolefine (HFO) und/oder Hydrohaloolefine wie z.B. 1234ze, 1234yf, 1233zd(E) und/oder 1336mzz, Sauerstoff-haltige Verbindungen wie Methylformiat, Aceton und/oder Dimethoxymethan, und/oder Chlorkohlenwasserstoffe, bevorzugt Dichlormethan und/oder 1,2-Dichlorethan.

Geeignete Wasser-Gehalte im Sinne dieser Erfindung hängen z.B. davon ab, ob zusätzlich zum Wasser noch ein oder mehrere Treibmittel eingesetzt werden oder nicht. Bei rein Wasser getriebenen Schaumstoffen liegen die Werte vorzugsweise bei 1 bis 20 pphp, werden zusätzlich andere Treibmittel eingesetzt, verringert sich die Einsatzmenge auf vorzugsweise 0,1 bis 5 pphp. Die Abkürzung pphp steht für parts per hundred parts polyol, also für Gewichtsteile pro Hundert Gewichtsteile Polyol. Dies ist eine in der Indrustrie üblicherweise verwendete Methode zur Mengenangabe von Komponenten einer Schaumformulierung.

Als weitere optionale Zusatzstoffe können vorzugsweise alle nach dem Stand der Technik bekannten Substanzen verwendet werden, die bei der Herstellung von Polyurethanen, insbesondere von Polyurethan -oder PIR-Schaumstoffen, Verwendung finden, wie zum Beispiel Vernetzer und Kettenverlängerer, Stabilisatoren gegen oxidativen Abbau (so genannte Antioxidantien), Flammschutzmittel, Tenside, Biozide, zellverfeinernde Additive, Zellöffner, feste Füllstoffe, Antistatik-Additive, Nukleierungsmittel, Verdicker, Farbstoffe, Pigmente, Farbpasten, Duftstoffe, Emulgatoren, usw..

Das erfindungsgemäße Verfahren zur Herstellung von PU- oder PIR-Schaumstoffen, vorzugsweise PU- oder PIR-Hartschaumstoffen, kann nach den bekannten Methoden durchgeführt werden, beispielsweise im Handmischverfahren oder bevorzugt mit Hilfe von Verschäumungsmaschinen. Wird das Verfahren mittels Verschäumungsmaschinen durchgeführt, können Hochdruck- oder Niederdruckmaschinen verwendet werden. Das erfindungsgemäße Verfahren kann sowohl diskontinuierlich als auch kontinuierlich durchgeführt werden.

Eine bevorzugte Polyurethan- oder Polyisocyanurat-Schaumformulierung im Sinne dieser Erfindung ergibt ein Raumgewicht von 5 bis 900 kg/m3 und hat vorzugsweise die in Tabelle 1 genannte Zusammensetzung.

**Tabelle 1:**

| Zusammensetzung einer bevorzugten Polyurethan- oder Polyisocyanurat-Schaumformulierung | |
|---|---|
| Komponente | Gewichtsteil |
| Polyol, umfassend Recycling-Polyol | 0,1 bis 100 |
| Amin-Katalysator, umfassend tertiäres Amin der Formel (X) | > 0 bis 5 |
| Optionale zusätzliche Katalysatoren | 0 bis 10 |
| Erfindungsgemäßes Zink(II)-Carboxylat | 0,1 bis 10 |
| Schaumstabilisator (Si-frei oder Si-haltig) | 0 bis 5 |
| Wasser | 0,01 bis 20 |
| Treibmittel | 0 bis 40 |
| Weitere Additive (Flammschutzmittel etc.) | 0 bis 90 |
| Stickstoff-haltige Verbindung V | > 0 bis10 |
| zusätzlicher Trimerisierungskatalysator Isocyanat-Index: 10 bis 1000 | > 0 bis10 |

Für weitere bevorzugte Ausführungsformen und Ausgestaltungen des erfindungsgemäßen Verfahrens sei außerdem auf die zuvor bereits im Zusammenhang mit der erfindungsgemäßen Zusammensetzung gemachten Ausführungen verwiesen.

Wie bereits erwähnt, ist ein weiterer Gegenstand der Erfindung ein PU- oder PIR-Schaumstoff, vorzugsweise Hartschaumstoff, erhältlich durch das genannte Verfahren.

PU- oder PIR-Hartschaumstoff ist ein feststehender technischer Begriff. Der bekannte und prinzipielle Unterschied zwischen Weichschaumstoff und Hartschaumstoff ist, dass ein Weichschaumstoff ein elastisches Verhalten zeigt und damit die Verformung reversibel ist. Der Hartschaumstoff wird demgegenüber dauerhaft verformt. Im Rahmen der vorliegenden Erfindung wird unter PU- oder PIR-Hartschaumstoff vorzugsweise ein Schaumstoff gemäß DIN 7726:1982-05 verstanden, der eine Druckfestigkeit nach DIN 53 421 / DIN EN ISO 604:2003-12 von vorzugsweise ≥ 20 kPa, bevorzugt ≥ 80 kPa, bevorzugter ≥ 100 kPa, weiter bevorzugt ≥ 150 kPa, besonders bevorzugt ≥ 180 kPa aufweist. Weiterhin verfügt der PU- oder PIR-Hartschaumstoff nach DIN EN ISO 4590:2016-12 vorzugsweise über eine Geschlossenzelligkeit von größer 50%, bevorzugt größer 80% und besonders bevorzugt größer 90%. PU- oder PIR-Hartschaumstoff ist im Rahmen der gesamten vorliegenden Erfindung besonders bevorzugt.

Vorzugsweise weist der PU- oder PIR-Schaumstoff ein Raumgewicht von vorzugsweise 5 bis 900 kg/m³, bevorzugt 8 bis 800, besonders bevorzugt 10 bis 600 kg/m³, insbesondere 30 bis 150 kg/m³ auf.

Es können vorzugsweise überwiegend geschlossenzellige Schaumstoffe hergestellt werden. Die Geschlossenzelligkeit beträgt vorzugsweise > 80%, bevorzugt > 90 %.

Die erfindungsgemäßen PU- oder PIR-Schaumstoffe können bevorzugt als oder zur Herstellung von Isoliermaterialien, vorzugsweise Dämmplatten, Kühlschränken, Isolierschaumstoffen, Dachhimmeln, Verpackungsschaumstoffen oder Sprühschaumstoffen verwendet werden.

Insbesondere in der Kühlhaus-, Kühlgeräte- und Hausgeräteindustrie; z. B. zur Herstellung von Dämmplatten für Dächer und Wände, als Isoliermaterial in Containern und Lagerhäusern für tiefgekühlte Ware sowie für Kühl- und Gefriergeräte, können die erfindungsgemäßen PU- oder PIR-Schaumstoffe mit Vorteil eingesetzt werden.

Weitere bevorzugte Anwendungsfelder liegen im Fahrzeugbau, insbesondere zur Herstellung von Fahrzeughimmel, Karosserieteilen, Innenverkleidungen, Kühlfahrzeugen, Großcontainern, Transportpaletten, Verpackungslaminaten, in der Möbelindustrie, z.B. für Möbelteile, Türen, Verkleidungen, in Elektronikanwendungen.

Vorzugsweise können erfindungsgemäße PU- oder PIR-Schaumstoffe (Polyurethan- oder Polyisocyanuratschaumstoffe) als Isoliermaterial für Kühlapparaturen verwendet werden.

Ein weiterer Gegenstand der Erfindung liegt in der Verwendung des PU- oder PIR-Schaumstoffs als Isolationsmaterial in der Kältetechnik, in Kühlmöbeln, im Bau-, Automobil-, Schiffbau- oder Elektronikbereich, als Dämmplatten, als Sprühschaumstoff, als Einkomponentenschaumstoff.

Die Erfindung wird nachfolgend anhand von Beispielen weiter beispielhaft beschrieben, ohne die Erfindung dadurch in irgendeiner Form zu beschränken. Sind Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden Mittelwerte angegeben, so handelt es sich, wenn nicht anderes angegeben, um Gewichtsmittel. Werden Parameter angegeben, die durch Messung bestimmt wurden, so wurden die Messungen, wenn nicht anders angegeben, bei einer Temperatur von 25 °C und Normaldruck (vorzugsweise 101325 Pa) durchgeführt.

### BEISPIELE:

### Materialien:

Stepanpol^{®} PS 2352: Polyester-Polyol der Firma Stepan (OHZ = 240 mg KOH/g)
Rokester^{®} 2600: Recycling-Polyester Polyol der Firma PCC (OHZ = 260 mg KOH/g)
TCPP: Tris(2-chlorisopropyl)phosphat, flüssiges Flammschutzmittel der Firma ICL
POLYCAT^{®} 5: Amin-Katalysator der Firma Evonik Operations GmbH
POLYCAT^{®} 206: Amin-Katalysator der Firma Evonik Operations GmbH
Kosmos^{®} K 65 LO: Trimerisierungs-Katalysator auf Basis von Kalium-Neodecanoat der Firma Evonik Operations GmbH
KOSMOS^{®} 33 MEG: Trimerisierungs-Katalysator auf Basis von Kalium-Acetat der Firma Evonik Operations GmbH
STRUKSILON KPROP 14: Trimerisierungs-Katalysator auf Basis von Kalium-Propionat der Firma Schill&Seilacher
TEGOSTAB^{®} B 8462: Schaumstabilisierender Stabilisator der Firma Evonik Operations GmbH MDI (44V20) = Desmodur^{®} 44V20L: Diphenylmethan-4,4'-diisocyanat (MDI) mit Isomeren und höherfunktionellen Homologen der Firma Covestro
Zink-Acetat Dihydrat: erhältlich bei Sigma-Aldrich
Zink-Propionat: erhältlich bei Sigma-Aldrich
Zink-Rizinoleat: erhältlich als TEGODEO^{®} PY 88 G von der Firma Evonik Operations GmbH N,N,N',N'-Tetrakis(2-hydroxypropyl)ethylendiamin: erhältlich bei Sigma Aldrich 2,4,6-tris[(dimethylamino)methyl]phenol: erhältlich bei Sigma-Aldrich Diethylenglykol (DEG): erhältlich bei Sigma-Aldrich

### Methoden:

### Herstellung von PIR-Schaumstoffen

Zur Ermittlung der Schaumstoffeigenschaften wurden die in Tabelle 1 zusammengefassten Formulierungen verwendet. Die Durchführung aller Verschäumungen erfolgte im Handmischverfahren. Dazu wurden Polyol, Katalysatoren, Wasser, Schaumstabilisator, Treibmittel und ggf. weitere Additive in einen Becher eingewogen und mit einem Tellerrührer (6 cm Durchmesser) für 30 s bei 1000 Upm vermischt. Durch erneutes Wiegen wurde die beim Mischvorgang verdunstete Treibmittelmenge bestimmt und wieder ergänzt. Anschließend wurde MDI zugegeben und die Reaktionsmischung mit dem beschriebenen Rührer 5 s bei 3000 Upm verrührt.

Die Reaktionsmischungen wurden unmittelbar nach dem Rühren in Bechern mit einem Durchmesser von 20 cm an der Oberkannte überführt, um frei gestiegene Schaumstoffe zu erhalten. Die Menge der Reaktionsmischung wurde so gewählt, dass die Spitze der Schaumstoffkuppe am Ende 10 bis 15 cm über der Oberkante des Bechers lag. Während des Aufschäumens wurde die Gelzeit bestimmt, um den Einfluss der Katalysatoren auf die Geschwindigkeit des Schäumens zu beurteilen. Nach 3 Minuten wurden die Schaumstoffkuppen an der Becheroberkante abgeschnitten, um eine ebene Schaumstofffläche zu erhalten. An dieser Oberfläche wurden die Eindrückhärten der Schaumstoffe bestimmt. Die Ergebnisse dieser Untersuchung sind in Tabelle 2 zusammengefasst.

Zur Ermittlung aller weiteren Eigenschaften wurde ein Schaumstoffkörper in einer auf 65 °C thermostatisierten und mit einer Polyethylenfolie ausgekleidet Aluminiumform der Größe 50x25x7 cm hergestellt. Hierfür wurde die Einsatzmenge der Schaumformulierung so bemessen, dass sie ca. 10 % über der zur Mindestbefüllung der Form notwendigen Menge lag. Nach 10 min wurden die Schaumstoffe entformt. Einen Tag nach der Verschäumung wurden die Schaumstoff-Eigenschaften, insbesondere Wärmeleitzahl, Oberflächenqualität und Innenstörungen, analysiert. Die Ergebnisse dieser Untersuchung sind in Tabelle 3 zusammengefasst.

### Bestimmung der Eindrückhärte:

Hierzu wurde die Kraft gemessen, um einen Stempel mit 4 cm Durchmesser in den Schaumstoff einzudrücken. Es wurden die Eindrückkräfte bei 5 mm Eindrücktiefe gemessen. Die Messung erfolgte jeweils nach 4, 6,5 und 9 Minuten nach der Schaumstoffherstellung, wobei der Stempel an in kreisförmiger Anordnung an drei nicht miteinander überlappenden Punkten der Schnittfläche eingedrückt wurde.

### Bestimmung der Wärmeleitzahl:

Die Wärmeleitzahl (λ-Wert in mW/m·K) wurde an 2,5 cm dicken Scheiben mit einem Gerät vom Typ Hesto Lambda Control, Modell HLC X206 bei einer mittleren Temperatur von 10 °C entsprechend den Vorgaben der Norm EN12667:2001 gemessen.

### Bewertung von Oberflächenqualität und Innenstörungen:

Oberflächen-Qualität und Innenstörungen wurden subjektiv anhand einer Skala von 1 bis 10 beurteilt, wobei 10 einem (idealisierten) ungestörten Schaumstoff und 1 einen extrem stark gestörten Schaumstoff (Kollaps) repräsentiert.

### Herstellung der erfindungsgemäßen Zink-haltigen Zubereitungen:

Die flüssigen Komponenten wurden vorgelegt und anschließend das jeweilige Zinksalz zugegeben und bei ca. 50 °C gerührt, bis eine klare Mischung erhalten wurde. Es wurden die folgenden Zink-haltigen Zubereitungen hergestellt.

Komponente A: Hergestellt aus Zink-Acetat (30 g), N,N,N',N'-Tetrakis(2-hydroxypropyl)-ethylendiamin (20 g) und DEG (50 g).

Komponente B: Hergestellt aus Zink-Acetat (30 g) 2,4,6-Tris[(dimethylamino)methyl]phenol (20 g) und DEG (50 g).

Komponente C: Hergestellt aus Zink-Propionat (30 g), 2,4,6-Tris[(dimethylamino) methyl]phenol (20 g) und DEG (50 g).

Komponente D: Hergestellt aus Zink-Rizenoleat (56 g), 2,4,6-Tris[(dimethylamino)methyl]phenol (12 g) und DEG (32 g).

Als weitere Trimerisierungskatalysatoren werden verwendet:
Komponente E: KOSMOS^{®} K 65 LO
Komponente F: KOSMOS^{®} 33 MEG
Komponente G: STRUKSILON KPROP 14.

### Zusammensetzung der hergestellten PIR-Schaumstoffe:

In Tabelle 1 sind die verwendeten Schaumformulierungen (F#) zur Untersuchung der Schaumstoffeigenschaften unter Verwendung verschiedener Anteile Recycling-Polyol sowie unterschiedlicher Katalysator-Zusammensetzungen zusammengefasst.

**Tabelle 1: Rezepturen zur Herstellung von PIR-Schaumstoffen. Mengenangaben in Gewichtsteilen.**

| **F#** | **1** | **2** | **3** | **4** | **5** |
|---|---|---|---|---|---|
| Stepanpol^{®} PS 2352 | 100 | 50 | 30 | | |
| Rokester^{®} 2600 | | 50 | 70 | 100 | 100 |
| TEGOSTAB^{®} B 8462 | 2 | 2 | 2 | 2 | 2 |
| POLYCAT^{®} 5 | 0,5 | 0,5 | 0,5 | 0,5 | |
| POLYCAT^{®} 206 | | | | | 1 |
| Weitere Katalysatoren | variabel | | | | |
| TCPP | 15 | 15 | 15 | 15 | 15 |
| Wasser | 0,5 | 0,5 | 0,5 | 0,5 | 0,5 |
| Iso/Cyclo-Pentan (70:30) | 16 | 16 | 16 | 16 | 16 |
| MDI (44V20)* | 212 | 217 | 222 | 227 | 227 |
| Index | 300 | 300 | 300 | 300 | 300 |

| | | | | | |
|---|---|---|---|---|---|
| * Die hier angegeben MDI Menge bezieht sich auf die Katalyse mit Kosmos^{®} 33 MEG und wurde jeweils so angepasst, dass ein konstanter Index erhalten wurde. | | | | | |

### Eigenschaften der hergestellten PIR-Schaumstoffe:

In Tabelle 2 sind die Eindrückhärten frei gestiegener Schaumstoffe zu unterschiedlichen Zeitpunkten nach der Verschäumung unter Verwendung unterschiedlicher Anteile Recycling-Polyol zusammengefasst. Spezifiziert werden die verwendete Formulierung #F entsprechend Tabelle 1, die zusätzlichen Katalysatoren (Kat.) sowie deren Dosierung in Gewichtsprozent (Dos.), die Gelzeit (GZ) in Sekunden sowie die Eindrückhärten in Newton nach der angegebenen Zeit nach Herstellung des Schaumstoffs. Hierbei sind die Formulierungen, die kein Zink enthalten, nicht erfinderische Vergleichsbeispiele. Alle für die Verschäumung verwendeten Katalysatoren können auch vorgemischt werden.

**Tabelle 2:**

| Herstellung frei gestiegener PIR-Schaumstoffe unter Verwendung von verschiedenen Schaumformulierungen und Katalysatoren | | | | | | | | | |
|---|---|---|---|---|---|---|---|---|---|
| | | | | | | | **4 min** | **6,5 min** | **9 min** |
| **Bsp.#** | **F#** | **Kat. 1** | **Dos.** | **Kat. 2** | **Dos.** | **GZ (s)** | **Eindrückhärte (N)** | | |
| 1* | 1 | F | 2,0 | -- | -- | 31 | 355 | 470 | 532 |
| 2* | 2 | F | 2,0 | -- | -- | 32 | 321 | 427 | 523 |
| 3 | 2 | F | 2,7 | A | 1,0 | 33 | 391 | 490 | 571 |
| 4* | 2 | F | 2,7 | -- | -- | 25 | 331 | 429 | 529 |
| 5 | 2 | F | 2,5 | B | 1,0 | 32 | 388 | 485 | 563 |
| 6* | 3 | F | 2,0 | -- | -- | 31 | 304 | 408 | 511 |
| 7 | 3 | F | 2,7 | A | 1,0 | 29 | 374 | 462 | 550 |
| 8 | 3 | F | 2,5 | B | 1,0 | 32 | 380 | 470 | 556 |
| 9* | 4 | F | 2,0 | -- | -- | 32 | 263 | 385 | 491 |
| 10 | 4 | F | 2,7 | A | 1,0 | 30 | 359 | 481 | 546 |
| 11 | 4 | F | 2,5 | B | 1,0 | 31 | 351 | 475 | 547 |
| 12 | 4 | F | 2,5 | C | 1,0 | 34 | 355 | 480 | 545 |
| 13 | 4 | F | 2,1 | D | 1,0 | 32 | 284 | 411 | 521 |
| 14* | 4 | E | 2,7 | -- | -- | 30 | 275 | 405 | 490 |
| 15 | 4 | E | 3,0 | A | 1,0 | 28 | 358 | 477 | 533 |
| 16 | 4 | E | 2,9 | B | 1,0 | 32 | 364 | 484 | 548 |
| 17* | 4 | G | 1,9 | -- | -- | 30 | 289 | 412 | 506 |
| 18 | 4 | G | 2,7 | A | 1,0 | 31 | 379 | 490 | 545 |
| 19 | 4 | G | 2,5 | B | 1,0 | 31 | 371 | 498 | 539 |
| 20* | 5 | F | 1,9 | -- | -- | 31 | 280 | 403 | 486 |
| 21 | 5 | F | 2,7 | A | 1,0 | 33 | 375 | 489 | 545 |
| 22 | 5 | F | 2,5 | B | 1,0 | 32 | 370 | 481 | 562 |

| | | | | | | | | | |
|---|---|---|---|---|---|---|---|---|---|
| * Vergleichsbeispiel | | | | | | | | | |

Aus dem Vergleich der Beispiele 1, 2, 6 und 9, in denen keine Zink-Verbindung verwendet wurde, wird ersichtlich, dass mit steigendem Anteil des Recycling-Polyols zunehmend geringere Eindrückhärten erzielt wurden. Durch Verwendung verschiedener Zink-haltiger Katalysator-Zusammensetzungen konnte in Kombination mit einem weiteren Trimerisierungs-Katalysator eine verbesserte Aushärtung des Schaums erreicht werden. Aus einem Vergleich von Beispiel 3 und 4 wird ersichtlich, dass eine Erhöhung der Dosierung des nicht Zink-haltigen Katalysators F zu einer Verkürzung der Gelzeit, jedoch nicht zu einer Verbesserung der Eindrückhärten führte. In Kombination mit dem Zink-haltigen Katalysatoren A konnte hingegen eine identische Gelzeit und verbesserte Durchhärtung erreicht werden.

Aus den Versuchen ist ersichtlich, dass die Verwendung einer erfindungsgemäßen Zusammensetzung zu einer verbesserten Aushärtung des Schaums führte und somit die Verwendung hoher Anteile Recycling-Polyol ohne eine Verminderung der Schaumstoffqualität hinsichtlich der Eindrückhärte, und der damit korrespondierenden Stauchhärte erlaubte.

Zur Untersuchung der weiteren Schaumstoff-Eigenschaften wurde mit ausgewählten Formulierungen ein weiterer Probenkörper in einer geschlossenen Form hergestellt. In Tabelle 3 sind die Wärmeleitzahlen λ sowie die Bewertungen der Oberflächen und Innenstörungen dieser Schaumstoffe zusammengefasst.

**Tabelle 3:**

| Herstellung von PIR-Schaumstoffen in einer Panel-Form unter Verwendung von verschiedenen Schaumformulierungen und Katalysatoren | | | | | | | | |
|---|---|---|---|---|---|---|---|---|
| **Bsp.#** | **F#** | **Kat. 1** | **Dos.** | **Kat. 2** | **Dos.** | **λ-Wert (mW/m·K)** | **Zellstruktur Oberfläche** | **Zellstruktur Innenstörungen** |
| 1* | 1 | F | 2,0 | -- | -- | 22,3 | 5,5 | 7 |
| 2* | 4 | F | 2,0 | -- | -- | 22,5 | 4,5 | 6 |
| 3 | 4 | F | 2,7 | A | 1,0 | 22,4 | 6,0 | 7 |
| 4 | 4 | F | 2,5 | B | 1,0 | 22,4 | 6,0 | 7 |
| 5 | 4 | F | 2,5 | C | 1,0 | 22,4 | 5,5 | 7 |
| 6 | 4 | F | 2,1 | D | 1,0 | 22,5 | 5,5 | 7 |

| | | | | | | | | |
|---|---|---|---|---|---|---|---|---|
| * Vergleichsbeispiel | | | | | | | | |

Bei Verwendung eines Anteils von 100% des Recycling-Polyols wurde eine Verminderung der Oberflächenqualitäten beobachtet. Diese konnte durch Verwendung einer erfindungsgemäßen Zusammensetzung verbessert werden.

## Patentansprüche

1. Zusammensetzung zur Herstellung von Polyurethan- oder Polyisocyanurat-Schaumstoff, umfassend eine Polyisocyanat-Komponente, eine Polyolkomponente, mindestens ein tertiäres Amin, optional mindestens einen Schaumstabilisator, optional mindestens ein Treibmittel,
**dadurch gekennzeichnet, dass** die Zusammensetzung zusätzlich mindestens eine zusätzliche Stickstoff-haltige Verbindung V enthält, vorzugsweise ausgewählt aus der Gruppe bestehend aus Amine, Amin-Alkoxylate, Aminosäuren, Amine mit mehreren Säure-Funktionen und modifizierte Phenole, welche mindestens zwei N-Atome aufweisen, bevorzugt ausgewählt aus der Gruppe bestehend aus N,N,N',N'-Tetrakis(2-hydroxypropyl)ethylendiamin, N,N,N',N'-Tetrakis(2-hydroxyethyl)ethylendiamin, 2-[[2-[2-(Dimethylamino)ethoxy]ethyl]methylamino]ethanol, Fettamin-Ethoxylate, wie Talkfettamin-Ethoxylat, Cocoamin-Ethoxylat, Cetyl/Stearyl-Amin-Ethoxylat oder PEG-3-Talg-Aminopropylamin, PPG-3-Talg-Aminopropylamin, Glycin, Lysin, Arginin, Sarkosin, Ethylendiamintetraacetat, Ethylendiamintriacetat-kokosalkylacetamid und modifizierte Phenole, welche mindestens zwei N-Atome aufweisen,
sowie zusätzlich mindestens ein Zink(II)-Carboxylat enthält, mit der Maßgabe, dass das enthaltene Zink(II)-Carboxylat in stöchiometrischer Form eingesetzt wird, also mit Zn(II) und Carboxylat im molaren Verhältnis von 1 zu 2,
wobei die Polyolkomponente mindestens ein Recycling-Polyol enthält.

2. Zusammensetzung nach Anspruch 1, **dadurch gekennzeichnet, dass** sie mindestens ein modifiziertes Phenol, welches mindestens zwei N-Atome umfasst, enthält, vorzugsweise ausgewählt aus der Gruppe bestehend aus 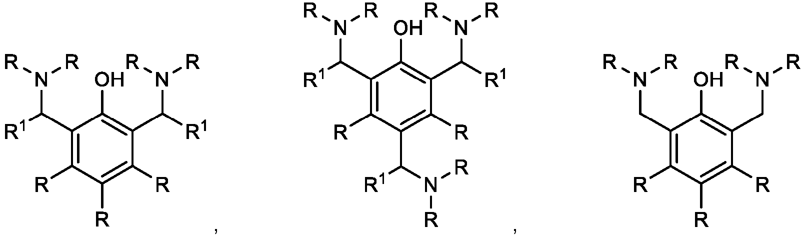 und 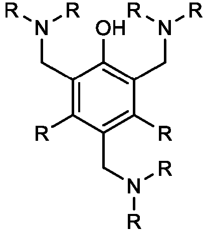 wobei
R = jeweils unabhängig voneinander H oder linearer, verzweigter oder cyclischer Kohlenwasserstoffrest mit 1 bis 20 Kohlenstoffatomen, der gesättigt, ungesättigt oder aromatisch sein kann, optional enthaltend Heteroatome wie O oder N,
R¹ = jeweils unabhängig voneinander H oder linearer, verzweigter oder cyclischer Kohlenwasserstoffrest mit 1 bis 20 Kohlenstoffatomen, der gesättigt, ungesättigt oder aromatisch sein kann,
besonders bevorzugt ausgewählt aus der Gruppe bestehend aus 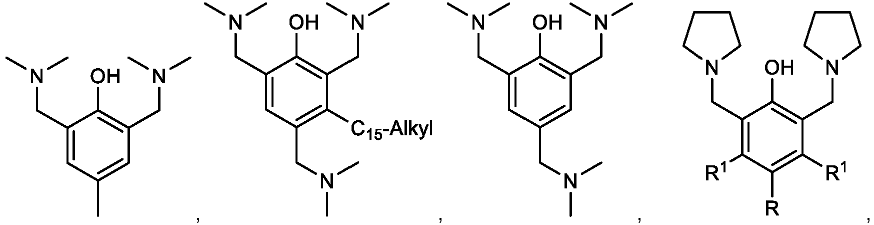 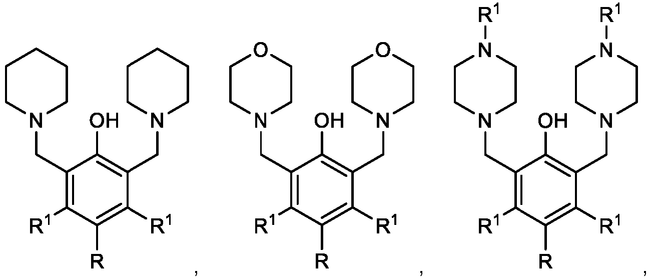 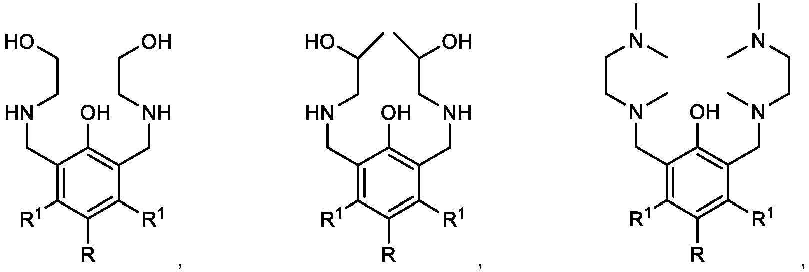 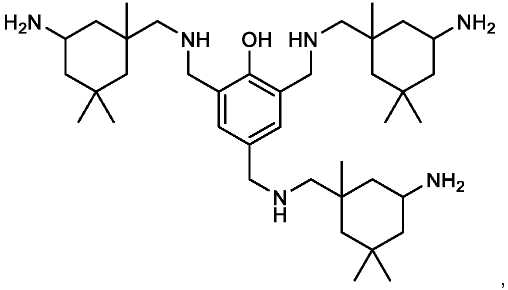 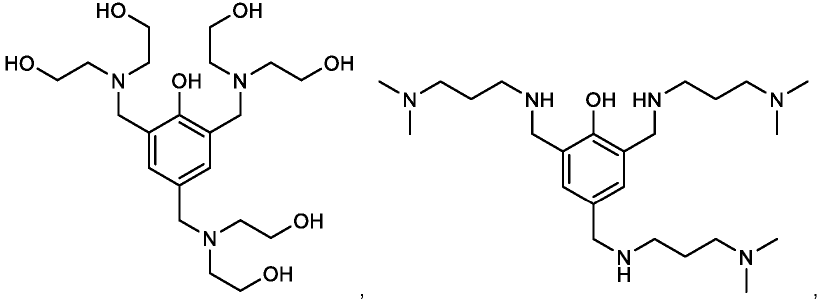 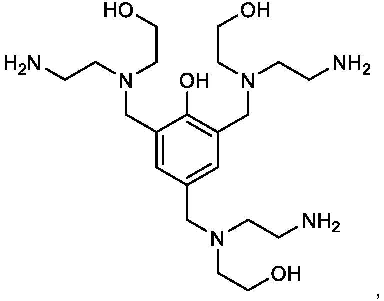 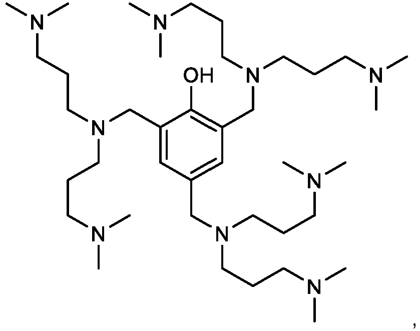 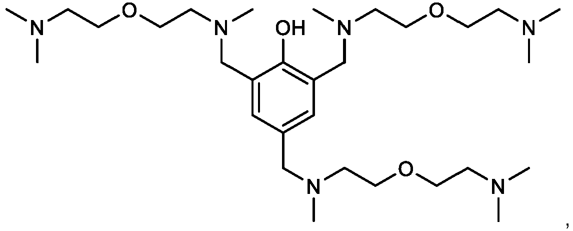 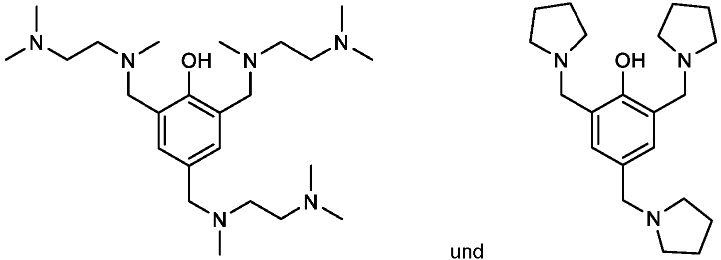 wobei
R = jeweils unabhängig voneinander H oder linearer, verzweigter oder cyclischer Kohlenwasserstoffrest mit 1 bis 20 Kohlenstoffatomen, der gesättigt, ungesättigt oder aromatisch sein kann, optional enthaltend Heteroatome wie O oder N,
R¹ = jeweils unabhängig voneinander H oder linearer, verzweigter oder cyclischer Kohlenwasserstoffrest mit 1 bis 20 Kohlenstoffatomen, der gesättigt, ungesättigt oder aromatisch sein kann,
ganz besonders bevorzugt ausgewählt aus der Gruppe bestehend aus 2,6-Bis[(dimethylamino)methyl]-4-methyl-phenol, 2,4,6-Tris[(dimethylamino)methyl]cardanol, 2,4,6-Tris[(dimethylamino)methyl]phenol, 2,6-Bis[(dimethylamino)methyl]-cardanol, 2,4,6-Tris[(hydroxy-ethylamino)methyl]phenol, 2,4,6-Tris[(hydroxypropylamino)methyl]phenol und 2,4,6-Tris[(dimethyl-aminopropylamino)methyl]phenol.

3. Zusammensetzung nach Anspruch 1 oder 2, **dadurch gekennzeichnet, dass** das mindestens eine Zink(II)-Carboxylat ausgewählt ist aus der Gruppe bestehend aus Zink(II)-acetat, Zink(II)-propionat, Zink(II)-pivalat, Zink(II)-2-ethylhexanoat (Zink(II)-octoat), Zink(II)-isononanoat (Zink(II)-3,5,5-trimethylhexanoat), Zink(II)-neodecanoat, Zink(II)-ricinoleat, Zink(II)-palmitat, Zink(II)-stearat, Zink(II)-oleat, Zink(II)-laurat, Zink(II)-napthenat, Zink(II)-benzoat, Zink(II)-laktat, Zink(II)-glycinat, Zink(II)-hippurat, Zink(II)-citrat, und Zink(II)-Seifen,
wobei der Einsatz von Zink(II)-acetat, Zink(II)-propionat, und/oder Zink(II)-ricinoleat ganz besonders bevorzugt ist.

4. Zusammensetzung nach einem der Ansprüche 1 bis 3 **dadurch gekennzeichnet, dass** insgesamt enthaltenes Zink(II)-Carboxylat und insgesamt enthaltene Stickstoff-haltige Verbindung V im Mengenverhältnis von 1 zu 0,5 bis 1 zu 5 Gewichtsteilen zueinander vorliegen.

5. Zusammensetzung nach einem der Ansprüche 1 bis 4, **dadurch gekennzeichnet, dass** das mindestens eine tertiäre Amin der Formel (X) genügt, 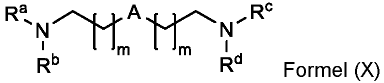 mit
m jeweils unabhängig voneinander 1 oder 2,
A ist O, S oder N-R^{e},
R^{a}, R^{b}, R^{c}, R^{d} und R^{e}, jeweils unabhängig voneinander gleiche oder verschiedene lineare, verzweigte oder cyclische Alkylreste mit 1 bis 20 Kohlenstoffatomen,
bevorzugt ist das mindestens eine tertiäre Amin der Formel (X) ausgewählt aus der Gruppe bestehend aus Pentamethyldiethylentriamin, Bis-(2-dimethylaminoethyl)ether, Tris(dimethylaminopropyl)amin, N-[2-[2-(Dimethylamino)ethoxy]ethyl]-N-methyl-1,3-propanediamin, Diisopropyltrimethyldiethylentriamin, Bis-(dimethylaminopropyl)methylamin, Trimethylaminoethylethanolamin, Bis-(2-isopropylmethylaminoethyl)ether, Bis-(2-isobutylmethylaminoethyl)ether, N,N'-Diisopropyl-N,N'-dimethyl-bis(aminoethyl)ether, N,N,N'-Triisopropyl-N'-methyl-bis(aminoethyl)ether und N,N'-Diisobutyl-N,N'-dimethyl-bis(aminoethyl)ether.

6. Zusammensetzung nach einem der Ansprüche 1 bis 5, **dadurch gekennzeichnet, dass** zudem noch mindestens ein zusätzlicher Trimerisierungskatalysator enthalten ist,
vorzugsweise ausgewählt aus Carboxylaten von Ammonium, Kalium und/oder anderen Alkali- oder Erdalkalimetallen,
bevorzugt ausgewählt aus Kalium-Carboxylaten und Carboxylaten von Ammonium-Kationen, ganz besonders bevorzugt ausgewählt aus der Gruppe bestehend aus Kaliumacetat, Kaliumformiat, Kaliumpropionat, Kaliumbutanoat, Kaliumpentanoat, Kaliumhexanoat, Kaliumheptanoat, Kalium-2-ethylhexanoat, Kaliumpivalat, Kaliumoctoat, Kaliumbutyrat, Kaliumisobutyrat, Kaliumnonanoat, Kaliumdecanoat, Kaliumrizinoleat, Kaliumstearat, Kaliumneodecanoat, und Carboxylaten von Tetramethylammonium, Tetraethylammonium, Triethylmethylammonium, Tetrapropylammonium, Tetrabutylammonium, Dimethyldiallylammonium, Trimethyl-(2-hydroxypropyl)ammonium, Triethyl-(2-hydroxypropyl)ammonium, Tripropyl-(2-hydroxypropyl)ammonium, Tributyl-(2-hydroxypropyl)ammonium, Trimethyl-(2-hydroxyethyl)-ammonium, Triethyl-(2-hydroxyethyl)ammonium, Tripropyl-(2-hydroxyethyl)ammonium, Tributyl-(2-hydroxyethyl)ammonium, Dimethylbenzyl-(2-hydroxyethyl)ammonium und/oder Dimethylbenzyl-(2-hydroxypropyl)ammonium, wobei die Carboxylate vorzugweise Acetate, Propionate, Butanoate, Pentanoate Pivalate, Octoate, Nonanoate, Decanoate, Neodecanoate, Rizinoleate und/oder Stearate sind.

7. Zusammensetzung nach einem der Ansprüche 1 bis 6, **dadurch gekennzeichnet, dass** das mindestens eine Recycling-Polyol in einer Gesamtmenge von mindestens 30 Gewichtsteilen, vorzugsweise mehr als 50 Gewichtsteilen, insbesondere bevorzugt 70 bis 100 Gewichtsteile, bezogen auf 100 Gewichtsteile der gesamten Polyol-Komponente eingesetzt wird.

8. Zusammensetzung nach einem der Ansprüche 1 bis 7, **dadurch gekennzeichnet, dass** das mindestens eine Recycling-Polyol durch Depolymerisation von Polyurethan, insbesondere Polyurethan-Schaumstoff, bevorzugt Polyurethan-Hartschaumstoff, besonders bevorzugt Polyether- und/oder Polyesterpolyol enthaltenden Polyurethan-Schaumstoff, vorzugsweise - Hartschaumstoff, mittels Hydrolyse, Alkoholyse, Glykolyse, Aminolyse oder Acidolyse, bevorzugt Alkoholyse, Glykolyse oder Aminolyse erhalten wurde, wobei auch verschiedene Recycling-Polyole aus unterschiedlichen Depolymerisationsverfahren, vorzugsweise Polyurethan-Depolymerisationsverfahren, kombiniert werden können,
wobei es besonders bevorzugt ist, wenn das mindestens eine Recycling-Polyol durch Depolymerisation von Abfall-Polyurethan erhalten wurde.

9. Zusammensetzung nach einem der Ansprüche 1 bis 8, **dadurch gekennzeichnet, dass** das mindestens eine Recycling-Polyol Recycling-Polyesterpolyol umfasst, bevorzugt basierend auf Diolen und aromatischen und/oder aliphatischen Dicarbonsäuren, wobei Polyalkylen- und/oder Polyoxyalkylen-Phthalat, -Isophthalat und/oder -Terephthalat-haltiges Recycling-Polyesterpolyol, insbesondere Polyethylenterephthalat-haltiges Recycling-Polyesterpolyol, besonders bevorzugt ist, wobei auch verschiedene Recycling-Polyesterpolyole kombiniert werden können,
und wobei der Einsatz von Recycling-Polyesterpolyol, erhalten durch das Recycling von Abfall-Polyester-Plastikflaschen, -Textilien oder -Teppiche, ganz besonders bevorzugt ist.

10. Zusammensetzung gemäß einem der Ansprüche 1 bis 9, **dadurch gekennzeichnet, dass** die Zusammensetzung als Treibmittel
(i) mindestens einen Kohlenwasserstoff mit 3, 4 oder 5 Kohlenstoff-Atomen, bevorzugt cyclo-, iso- und/oder n-Pentan,
und/oder
(ii) mindestens ein Hydrofluoroolefin und/oder mindestens ein Hydrohaloolefin, bevorzugt 1234ze, 1234yf, 1224yd, 1233zd(E) und/oder 1336mzz,
sowie
zwingend Wasser umfasst.

11. Verfahren zur Herstellung von Polyurethan- oder Polyisocyanurat-Schaumstoff, vorzugsweise Polyurethan- oder Polyisocyanurat-Hartschaumstoff, durch Umsetzung einer Polyolkomponente mit einer Polyisocyanatkomponente, wobei die Umsetzung in Gegenwart mindestens eines tertiären Amins erfolgt, und wobei die Polyolkomponente mindestens ein Recycling-Polyol umfasst,
**dadurch gekennzeichnet, dass** bei der Umsetzung
zusätzlich mindestens eine Stickstoff-haltige Verbindung V eingesetzt wird, vorzugsweise ausgewählt aus der Gruppe bestehend aus Amine, Amin-Alkoxylate, Aminosäuren, Amine mit mehreren Säure-Funktionen und modifizierte Phenole, welche mindestens zwei N-Atome aufweisen, bevorzugt ausgewählt aus der Gruppe bestehend aus N,N,N',N'-Tetrakis(2-hydroxypropyl)ethylendiamin, N,N,N',N'-Tetrakis(2-hydroxyethyl)ethylendiamin, 2-[[2-[2-(Dimethylamino)ethoxy]ethyl]methylamino]ethanol, Fettamin-Ethoxylate, wie Talkfettamin-Ethoxylat, Cocoamin-Ethoxylat, Cetyl/Stearyl-Amin-Ethoxylat oder PEG-3-Talg-Aminopropylamin, PPG-3-Talg-Aminopropylamin, Glycin, Lysin, Arginin, Sarkosin, Ethylendiamintetraacetat, Ethylendiamintriacetat-kokosalkylacetamid, und modifizierte Phenole, welche mindestens zwei N-Atome aufweisen,
sowie
zusätzlich mindestens ein Zink(II)-Carboxylat eingesetzt wird, mit der Maßgabe, dass das enthaltene Zink(II)-Carboxylat in stöchiometrischer Form eingesetzt wird, also mit Zn(II) und Carboxylat im molaren Verhältnis von 1 zu 2,
besonders bevorzugt wird das Verfahren unter Einsatz einer Zusammensetzung nach einem der Anspruche 1 bis 10 durchgeführt.

12. Verfahren nach Anspruch 11, **dadurch gekennzeichnet, dass** das mindestens eine Recycling-Polyol in einer Gesamtmenge von mindestens 30 Gewichtsteilen, vorzugsweise mehr als 50 Gewichtsteilen, insbesondere bevorzugt 70 bis 100 Gewichtsteile, bezogen auf 100 Gewichtsteile der gesamten Polyol-Komponente eingesetzt wird.

13. Polyurethan- oder Polyisocyanurat-Schaumstoff, insbesondere Polyurethan- oder Polyisocyanurat- Hartschaumstoff, hergestellt gemäß dem Verfahren nach Anspruch 12.

14. Verwendung von mindestens einer Stickstoff-haltigen Verbindung V, vorzugsweise ausgewählt aus der Gruppe bestehend Amine, Amin-Alkoxylate, Aminosäuren, Amine mit mehreren Säure-Funktionen und modifizierte Phenole, welche mindestens zwei N-Atome aufweisen, bevorzugt ausgewählt aus der Gruppe bestehend aus N,N,N',N'-Tetrakis(2-hydroxypropyl)ethylendiamin, N,N,N',N'-Tetrakis(2-hydroxyethyl)ethylendiamin, 2-[[2-[2-(Dimethylamino)ethoxy]ethyl]methylamino]ethanol, Fettamin-Ethoxylate, wie Talkfettamin-Ethoxylat, Cocoamin-Ethoxylat, Cetyl/Stearyl-Amin-Ethoxylat oder PEG-3-Talg-Amino-propylamin, PPG-3-Talg-Aminopropylamin, Glycin, Lysin, Arginin, Sarkosin, Ethylendiamintetraacetat, Ethylendiamintriacetat-kokosalkylacetamid, und modifizierte Phenole, welche mindestens zwei N-Atome aufweisen,
zusammen mit mindestens einem Zink(II)-Carboxylat, mit der Maßgabe, dass das enthaltene Zink(II)-Carboxylat in stöchiometrischer Form eingesetzt wird, also mit Zn(II) und Carboxylat im molaren Verhältnis von 1 zu 2,
in Verfahren zur Herstellung von Polyurethan- oder Polyisocyanurat-Schaumstoff, insbesondere Polyurethan- oder Polyisocyanurat-Hartschaumstoff, durch Umsetzung einer Polyolkomponente mit einer Polyisocyanatkomponente, wobei die Umsetzung in Gegenwart mindestens eines tertiären Amins erfolgt, und wobei die Polyolkomponente mindestens ein Recycling-Polyol umfasst,
zur Verbesserung der Gebrauchseigenschaften des resultierenden Polyurethan- oder Polyisocyanurat-Schaumstoffs, vorzugsweise Polyurethan- oder Polyisocyanurat-Hartschaumstoffs, insbesondere zur Verbesserung der Oberflächenqualität und zur Erhöhung der Stauchhärte des resultierenden Polyurethan- oder Polyisocyanurat-Hartschaumstoffs bzw. um die Erhöhung der Stauchhärte zu einem frühen Zeitpunkt zu erreichen, im Vergleich zu Polyurethan- oder Polyisocyanurat-Schaumstoffen, vorzugsweise -Hartschaumstoffen, die ohne Zink(II)-Carboxylat hergestellt wurden (Stauchhärte bestimmbar nach DIN EN ISO 844:2014-11).

15. Verwendung einer Zink(II)-Carboxylat-haltigen Zubereitung, welche umfasst:
i) mindestens ein Zink(II)-Carboxylat, vorzugsweise wie in Anspruch 1 oder 3 definiert, in einer Gesamtmenge von 2 bis 50 Gew.-%, vorzugsweise 5 bis 45 Gew.-%, besonders bevorzugt 10 bis 40 Gew%, mit der Maßgabe, dass das enthaltene Zink(II)-Carboxylat in stöchiometrischer Form eingesetzt wird, also mit Zn(II) und Carboxylat im molaren Verhältnis von 1 zu 2,
ii) optional mindestens ein Trägermedium, in Gesamtmenge von 0 bis 95 Gew.-%, vorzugsweise 10 bis 90 Gew.-%, besonders bevorzugt 20 bis 70 Gew%,
iii) mindestens eine Stickstoff-haltige Verbindung V, wie in einem der Ansprüche 1 oder 2 angegeben, in Gesamtmenge von 1 bis 90 Gew.-%, vorzugsweise 2 bis 60 Gew.-%, besonders bevorzugt 5 bis 50 % Gew-%,
Gew.-% jeweils bezogen auf die gesamte Zubereitung, wobei die Komponenten i) bis iii) zusammen vorzugsweise mindestens 51 Gew.-% der gesamten Zubereitung ausmachen müssen,
sowie vorzugsweise zusätzlich umfassend
iv) mindestens ein tertiäres Amin, vorzugsweise wie in Anspruch 5 angegeben, in Mengen von 1 bis 30 Gew-%, bevorzugt 2 bis 25 Gew-%, besonders bevorzugt 5 bis 20 Gew-%,
v) optional mindestens einen Trimerisierungskatalysator, vorzugsweise wie in Anspruch 6 angegeben, in Mengen von 1 bis 90 Gew.-%, vorzugsweise 2 bis 60 Gew.-%, besonders bevorzugt 5 bis 50 % Gew-%,
Gew.-% wiederum jeweils bezogen auf die gesamte Zubereitung,
wobei die Komponenten i) bis v) zusammen vorzugsweise mindestens 52 Gew.-% der gesamten Zubereitung ausmachen müssen,
zur Katalyse bei der Herstellung von Polyurethan- oder Polyisocyanurat-Schaumstoff unter Einsatz von mindestens einem Recycling-Polyol,
zur Verbesserung der Gebrauchseigenschaften des resultierenden Polyurethan- oder Polyisocyanurat-Schaumstoffs, vorzugsweise Polyurethan- oder Polyisocyanurat-Hartschaumstoffs, insbesondere zur Verbesserung der Oberflächenqualität sowie zur Erhöhung der Stauchhärte des resultierenden Polyurethan- oder Polyisocyanurat-Schaumstoffs, vorzugsweise -Hartschaumstoffs bzw. um die Erhöhung der Stauchhärte zu einem frühen Zeitpunkt zu erreichen, im Vergleich zu Polyurethan- oder Polyisocyanurat-Schaumstoffen, vorzugsweise -Hartschaumstoffen, die ohne Zink(II)-Carboxylat hergestellt wurden (Stauchhärte bestimmbar nach DIN EN ISO 844:2014-11).
